# EUROPEAN PATENT APPLICATION

(11) **EP 4 636 929 A1**
(43) Date of publication of application: **22.10.2025**
(21) Application number: 23938220.3
(22) Date of filing: 03.11.2023
(51) Int. Cl.: H01M 50/449, H01M 50/403

(54) **SEPARATOR AND PREPARATION METHOD THEREFOR, SECONDARY BATTERY AND PREPARATION METHOD THEREFOR, AND ELECTRIC DEVICE**

(30) Priority: 25.05.2023 CN 202310600998
(71) Applicant: Contemporary Amperex Technology Co., Limited, Ningde, Fujian 352100 (CN)
(72) Inventor: XIA, Zhonghui, Ningde, Fujian 352100 (CN); DENG, Bokai, Ningde, Fujian 352100 (CN); WANG, Zhaoguang, Ningde, Fujian 352100 (CN); WANG, Yaohui, Ningde, Fujian 352100 (CN); HUANG, Siying, Ningde, Fujian 352100 (CN); SUN, Chengdong, Ningde, Fujian 352100 (CN); OUYANG, Chuying, Ningde, Fujian 352100 (CN)
(74) Representative: Frick, Robert
(86) International application number: PCT/CN2023/129679
(87) International publication number: WO 2024/239552

(57) **Abstract**

Disclosed in the present application are a separator and a preparation method therefor, an electrode assembly, a secondary battery, a battery module, a battery pack and an electrical apparatus. The separator comprises: a first microporous base membrane, a second microporous base membrane, and a coating disposed between the first microporous base membrane and the second microporous base membrane, wherein the coating comprises lithium-rich particles, and the ratio of the average particle size Dv50 of the lithium-rich particles to the thickness of the coating is 1:(1-15).

## Description

### CROSS-REFERENCE TO RELATED APPLICATIONS

The present application claims the priority of Chinese Patent Application No. 202310600998.8 filed on May 25, 2023 and entitled "SEPARATOR AND PREPARATION METHOD THEREFOR, SECONDARY BATTERY AND PREPARATION METHOD THEREFOR, AND ELECTRICAL APPARATUS", the entire contents of which are incorporated herein by reference.

### TECHNICAL FIELD

The present application belongs to the technical field of batteries, and relates in particular to a separator and preparation method therefor, a secondary battery and preparation method therefor, and an electrical apparatus.

### BACKGROUND

As lithium-ion battery production continues to expand, the number of discarded/used lithium-ion batteries also increases. Scrap batteries are not only rich in valuable metal elements, but also retain residual energy inside the batteries. In addition, if not handled properly, batteries will face serious resource shortages, and scrap batteries will bring risks and pollution to the environment in which we live. Pyro/hydrometallurgical methods have been proved to be an effective strategy for extracting key metals and are currently widely used in the recovering of scrap electrode plate batteries. However, high energy consumption or cumbersome steps undoubtedly increase the cost of the entire recovering process. Traditional recovering processes may not be the best option for handling scrap battery electrode plates. Recovering some structurally stable scrap positive electrode plates by replenishing lithium through diaphragms is a new solution.

A battery separator is an insulating film with a porous structure and is an important component of the battery, which can block a positive electrode plate and a negative electrode plate to prevent the positive electrode plate and the negative electrode plate from short-circuiting inside the battery.

The battery separator has nanoscale pores inside, which allow active ions including lithium ions to pass freely during the charge and discharge process, and provide a channel for the rapid transmission of active ions between a positive electrode and a negative electrode. A multi-layer composite diaphragm has the advantages of multiple materials. Compared with the composite of several different diaphragms, the complementarity of the performance between the layers of materials can be achieved. By sandwiching an intermediate functional layer in the multi-layer diaphragm, the diaphragm may be functionalized and a thickness of the diaphragm may be reduced. In recent years, with the wide application of secondary batteries and the increasing demand for performance of the secondary batteries, higher requirements have been raised for performance of the separator.

### SUMMARY OF THE INVENTION

An objective of the present application is to provide a separator that can improve the kinetic performance and cycle performance of a secondary battery containing the separator. A further objective of the present application is to provide a secondary battery and an electrical apparatus containing the above-mentioned separator, so as to obtain improved kinetic performance and cycle performance of the secondary battery.

In a first aspect, an embodiment of the present application provides a separator, including:
a first microporous base membrane,
a second microporous base membrane, and
a coating arranged between the first microporous base membrane and the second microporous base membrane, where the coating includes lithium-rich particles, and a ratio of an average particle size Dv50 of the lithium-rich particles to a thickness of the coating is 1:(1-15).

According to the technical solution of the embodiment of the present application, the coating of the separator contains lithium-rich particles, and the average particle size Dv50 of the lithium-rich particles and the thickness of the coating are within the above-specified range. When the separator is in the winding process or even when it is mechanically squeezed, the lithium-rich particles do not damage or puncture the first microporous base membrane and the second microporous base membrane, which is beneficial to improving the safety performance of a secondary battery containing the separator. In addition, during the formation and subsequent charge and discharge processes of the secondary battery including the separator of the embodiment of the present application, on the one hand, the lithium-rich particles may undergo oxidative decomposition or dissolution, and the vacancies generated by the decomposition increase the porosity of the separator, which is beneficial to improving the liquid absorption capacity and active ion permeability of the separator, reducing the internal resistance of a battery cell, and enhancing the kinetic performance of the secondary battery including the separator; and on the other hand, lithium ions generated after the decomposition of the lithium-rich particles can replenish lithium ions consumed in, for example, the formation and subsequent charge and discharge processes, which is beneficial to maintaining the capacity of the battery, thereby enhancing the cycle performance of the secondary battery including the separator.

In addition, when the separator of the embodiment of the present application is combined with a positive electrode plate obtained by disassembling a recovered battery after being charged and discharged, an electrode assembly including the separator and the positive electrode plate which is charged and discharged is obtained. The lithium ions generated after the decomposition of the lithium-rich particles in the separator can replenish lithium ions consumed by a recovered positive electrode plate which is already discharged, which is beneficial to restore the capacity of the secondary battery, thereby reactivating a positive electrode active substance and enhancing the cycle performance of the secondary battery including the separator.

In any embodiment of the present application, the ratio of the average particle size Dv50 of the lithium-rich particles to the thickness of the coating is 1: 1: (1.5-10). The average particle size Dv50 of the lithium-rich particles and the thickness of the coating are within the above-specified range, thereby further improving the safety performance of the secondary battery including the separator. In addition, during the formation and subsequent charge and discharge processes of the secondary battery including the separator of the embodiment of the present application, the kinetic performance of the secondary battery including the separator is further enhanced; on the other hand, the cycle performance of the secondary battery including the separator is further enhanced.

In any embodiment of the present application, the average particle size Dv50 of the lithium-rich particles is in a range from 0.2 µm to 3 µm, optionally, 0.25 µm to 1 µm. When the average particle size Dv50 of the lithium-rich particles is within the above range, when the separator including the lithium-rich particles is formed and charged and discharged, the lithium-rich particles are oxidatively decomposed or dissolved to form voids, which can improve the void distribution of the coating in the separator to form voids with a particle size within the above range. The vacancies are beneficial to increase the porosity of the separator, reduce the internal ionic resistance of the battery cell, and enhance the kinetic performance of the secondary battery including the separator. When the average particle size Dv50 of the lithium-rich particles is within the above range, the damage to the coating of the separator after the decomposition of the lithium-rich particles may be reduced or avoided, thereby improving the safety performance of the secondary battery including the separator.

In any embodiment of the present application, the average particle size Dv90 of the lithium-rich particles is in a range from 0.5 µm to 2.5 µm, optionally, 0.5 µm to 2.0 µm. The average particle size Dv90 of the lithium-rich particles is within the above range. When the volume expansion of a negative electrode material extrudes the separator during the charge and discharge process of the secondary battery, extrusion or puncture on the first microporous base membrane or the second microporous base membrane by the lithium-rich particles may be further reduced or avoided, thereby improving the safety performance of the secondary battery including the separator.

In any embodiment of the present application, the average particle size Dv99 of the lithium-rich particles is in a range from 1 µm to 20 µm. The average particle size Dv99 of the lithium-rich particles is within the above range. When the volume expansion of the negative electrode material extrudes the separator during the charge and discharge process of the secondary battery, the extrusion or puncture on the first microporous base membrane or the second microporous base membrane by the lithium-rich particles may be further reduced or avoided, thereby improving the safety performance of the battery.

In any embodiment of the present application, a mass percentage content of the lithium-rich particles in the coating is in a range from 10% to 80%, optionally, 25% to 75%. When the separator including the lithium-rich particles is charged and discharged, the lithium-rich particles are oxidatively decomposed to form voids. The mass percentage content of the lithium-rich particles in the coating is within the above range, which can improve the void distribution of the coating in the separator, increase the porosity of the separator, reduce the internal resistance of the battery cell, and improve the kinetic performance of the secondary battery including the separator. In addition, the mass percentage content of the lithium-rich particles in the coating is within the above range, which can avoid or reduce the damage to the coating of the separator after the decomposition of the lithium-rich particles, and further improve the safety performance of the secondary battery including the separator.

In any embodiment of the present application, the lithium-rich particles include a lithium salt or a lithium-containing composite oxide of a layered structure, a spinel structure or an olivine structure. The lithium-rich particles of the above structure may effectively maintain a structure of the coating, avoid structural collapse caused by vacancies caused by oxidative decomposition of the lithium-rich particles, increase the porosity and air permeability of the coating, reduce the internal ionic resistance of the battery cell, and improve the kinetic performance of the secondary battery including the separator.

In any embodiment of the present application, the lithium-rich particles include one or more of Li2C2O4, LiOH, Li15Si4 and Li4Sn. The lithium-rich particles of the above structure may be decomposed during battery formation, which is beneficial to improving the porosity and air permeability of the coating, reducing the internal ionic resistance of the battery cell, and improving the kinetic performance of the secondary battery including the separator.

In any embodiment of the present application, the lithium-rich particles have a core-shell structure, where a core includes a lithium salt of a layered structure or a lithium-containing composite oxide; and a shell includes one or more of carbon and silicon oxides. The lithium-rich particles have the core-shell structure. The shell includes one or more of carbon and silicon oxides, has a certain flexibility and wraps the lithium salt or composite oxide, which may prevent an edge of the lithium salt or composite oxide from scratching or puncturing the first microporous base membrane and the second microporous base membrane, further avoid a phenomenon of short circuit of the secondary battery including the separator, and improve its safety performance.

In any embodiment of the present application, the lithium salt or lithium-containing composite oxide having the layered structure includes one or more of LiₓMO_{y}, and Liₓ [M_{b}A_{d}]O_{y}, where M includes one or more of Mn, Co and Ni metal, and A includes one or more elements of Al, Fe, V, Mg, Ca, Sr, and Ga, where x is 0.8 to 2.2, y is 1.8 to 3.2, b>0, d>0, and b+d =1.

During the formation and charge and discharge processes of the battery with the separator according to the present embodiment, the lithium-rich particles including lithium salts of LiₓMO_{y} and Liₓ [M_{b}A_{d}]O_{y} may undergo oxidative decomposition, and no decomposition products harmful to the battery performance remain; the vacancies generated by the decomposition increase the porosity of the separator, and may effectively maintain the structure of the coating in the separator, reduce the internal resistance of the battery cell, thereby improving the kinetic performance of the secondary battery including the separator; and in addition, lithium ions generated after the decomposition of the lithium-rich particles are beneficial to maintaining or restoring the capacity of the battery and maintaining a lithium content of an electrode plate, thereby enhancing the cycle performance of the secondary battery including the separator.

In any embodiment of the present application, the first microporous base membrane and the second microporous base membrane respectively include one or more of a polyolefin film, a non-woven fabric film, a polyester film, a polyether film, a polyetherimide film, and a fluorinated polyetherimide film. Materials of the first microporous base membrane and the second microporous base membrane are selected from the above materials, which have good strength and toughness, so that the separator has a high capability of resisting puncturing by foreign particles or the lithium-rich particles, thereby improving the safety performance of the secondary battery including the separator.

In any embodiment of the present application, a thickness of the first microporous base membrane and a thickness of the second microporous base membrane are respectively in a range from 3 µm to 20 µm. The first microporous base membrane and the second microporous base membrane each have an appropriate thickness, so that the separator has a suitable total thickness, which helps to reduce a volume and weight of the secondary battery, and may improve the safety performance of the secondary battery including the separator.

In any embodiment of the present application, a porosity of the first microporous base membrane and a porosity of the second microporous base membrane are respectively in a range from 30% to 70%. The first microporous base membrane and the second microporous base membrane each have the above porosity, which may allow the first microporous base membrane and the second microporous base membrane to fully absorb and penetrate an electrolyte, so that the coating between the first microporous base membrane and the second microporous base membrane may be fully in contact with the electrolyte, and the lithium-rich particles may be quickly oxidatively decomposed in the presence of the electrolyte to form vacancies. Therefore, the separator according to the present embodiment can ensure rapid transmission of active ions including lithium ions, thereby improving the kinetic performance of the secondary battery including the separator.

In any embodiment of the present application, the coating has a thickness ranging from 0.5 µm to 20 µm. The thickness of the coating is within the above range, which can make the separator have a suitable total thickness; it can allow a larger amount of lithium-rich particles to be added to the coating while still effectively embedding the added lithium-rich particles, thereby better achieving the lithium replenishment effect on the electrode plate.

In any embodiment of the present application, the coating includes a binder and ceramic particles. The coating including the ceramic particles and the binder enables the separator to have good mechanical strength and a "thermal shutdown" function, thereby improving the safety performance of the secondary battery including the separator.

In any embodiment of the present application, an average particle size Dv50 of the ceramic particles is in a range from 0.2 µm to 6 µm. The average particle size of the ceramic particles is within the above range, which may improve the uniformity of a surface of the coating in the separator, maintain the stability of the structure of the coating, and improve the safety performance of the secondary battery including the separator.

In any embodiment of the present application, a mass content of the ceramic particles in the coating is in a range from 20% to 60%. The mass content of the ceramic particles is within the above range, which may maintain the stability of the structure of the coating and improve the safety performance of the secondary battery including the separator.

In any embodiment of the present application, a mass content of the binder in the coating is in a range from 10% to 20%. The mass content of the binder in the coating is within the above range, which is beneficial to maintaining the stability of the structure of the coating and enhancing the adhesion between the first microporous base membrane and the coating and between the second microporous base membrane and the coating respectively, and a situation that vacancies in the coating caused by the decomposition of the lithium-rich particles during the charge and discharge process of the secondary battery including the separator separate the first microporous base membrane from the second microporous base membrane may be avoided.

In any embodiment of the present application, the porosity of the separator is in a range from 25% to 65%. The porosity of the separator is within an appropriate range, which is helpful for the separator to have an appropriate amount of electrolyte retention, thereby improving the kinetic performance of the secondary battery including the separator.

In any embodiment of the present application, under the condition of testing for 1 h at 130°C, a thermal shrinkage rate of the separator in a machine direction (MD) is ≤5.0%, and a thermal shrinkage rate of the separator in a transverse direction (TD) is ≤5.0%. The test for the thermal shrinkage rate in the machine direction (MD) and in the transverse direction (TD) may refer to the national standard GB/T 36363-2018. The separator according to the embodiment of the present application has a composite structure of multiple film layers, which may enable the separator to have a smaller thermal shrinkage rate in the MD or TD. Therefore, even if the separator is damaged, a hole expansion rate of a damaged part under the heating condition is low. Therefore, even when the secondary battery including the separator is mechanically damaged by nail piercing or the like, the separator can still maintain a good separation effect, thus reducing the risk of thermal runaway of the secondary battery and improving the safety performance.

In any embodiment of the present application, the air permeability of the separator is in a range from 300 s/100cc to 500 s/100cc. The air permeability of the separator is within an appropriate range that facilitates the passage of ions through the separator, and thus the secondary battery have relatively high capacity performance and cycle performance.

In any embodiment of the present application, a tensile strength of the separator in the transverse direction (TD) is in a range from 1000 kg/cm² to 2000 kg/cm². The tensile strength of the separator in the transverse direction (TD) is within an appropriate range, and high toughness and strength may be achieved in this direction. Even when the secondary battery with the separator is mechanically damaged such as nail piercing or the like, the separator can still play a good role in separation, thereby reducing the risk of secondary thermal runaway and improving the safety performance.

In any embodiment of the present application, a tensile strength of the separator in the machine direction (MD) is in a range from 1200 kg/cm² to 1800 kg/cm². The tensile strength of the separator in the machine direction (MD) is within an appropriate range, and high toughness and strength may be achieved in this direction. Even when the secondary battery with the separator is mechanically damaged such as nail piercing or the like, the separator can still play a good role in separation, thereby reducing the risk of secondary thermal runaway and improving the safety performance.

In a second aspect, an embodiment of the present application provides separator, including:
a first microporous base membrane and a second microporous base membrane, a first coating arranged between the first microporous base membrane and the second microporous base membrane, and
a third microporous base membrane, arranged on a side of the second microporous base membrane facing away from the first microporous base membrane; and
a second coating, arranged between the second microporous base membrane and the third microporous base membrane;
where the first coating and/or the second coating include(s) lithium-rich particles, where a ratio of an average particle size Dv50 of the lithium-rich particles to a thickness of the coating is 1:(1-15), optionally, 1:(1.5-10).

In a third aspect, an embodiment of the present application provides a method for preparing a separator, including:
providing a slurry including lithium-rich particles;
providing a coating of the slurry between a first microporous base membrane and a second microporous base membrane; and
drying the slurry, and making a ratio of an average particle size Dv50 of the lithium-rich particles to a thickness of the dried coating be 1:(1-15), to obtain a separator in the first aspect.

According to the separator obtained by the preparation method of the present application, the average particle size Dv50 of the lithium-rich particles and the thickness of the coating are within the above ranges, and during the winding process of the separator, the lithium-rich particles do not damage or puncture the first microporous base membrane and the second microporous base membrane; during the formation and subsequent charge and discharge processes of the separator, on the one hand, the lithium-rich particles are oxidatively decomposed, and vacancies generated by the decomposition are beneficial to increase a porosity of the separator, an internal resistance of a battery cell is reduced, a liquid absorption capacity and a permeability of active ions are better enhanced, and the kinetic performance of a secondary battery including the separator is enhanced. In addition, the lithium ions generated after the decomposition of the lithium-rich particles are beneficial to maintain or restore the capacity of the battery, and to maintain a lithium content of an electrode plate, thereby enhancing the cycle performance of the secondary battery including the separator.

In a fourth aspect, an embodiment of the present application provides a secondary battery, including the separator in the first aspect or the second aspect, or a separator prepared by the preparation method in the third aspect.

In any embodiment of the present application, the secondary battery includes a recovered positive electrode plate, the recovered positive electrode plate includes a charged and discharged positive electrode active material film layer, and the positive electrode active material film layer includes a lithium-containing positive electrode active material. When the positive electrode plate in an electrode assembly is a positive electrode plate that has been charged and discharged, it may be a positive electrode plate from a recovered battery. Compared with a normal positive electrode plate, the active lithium ions in the positive electrode plate in the recovered battery have a certain amount of lithium loss. By using the separator of the embodiment of the present application, during the formation and subsequent charge and discharge processes of the secondary battery including the electrode assembly, lithium ions generated after the decomposition of lithium-rich particles can replenish lithium ions consumed by the positive electrode active material film layer in the recovered battery, which is beneficial to restore the capacity of the battery, thereby enhancing the cycle performance of the secondary battery including the separator.

In any embodiment of the present application, the lithium-containing positive electrode active material includes a lithium iron phosphate material, a mixed crystal phase of LFP and FPO is included in a state that a capacity of the secondary battery is discharged to 0%, and a molar ratio of an LFP crystal phase to an FPO crystal phase is 97:(3-97). In the recovered positive electrode plate, there is a certain amount of loss of a lithium element in the lithium-containing positive electrode active material, a structural phase change of the lithium-containing positive electrode active material is within the above range, and combination with the separator containing the lithium-rich particles in the embodiment of the present application is allowed. The recovered positive electrode plate may be utilized. The separator of the embodiment of the present application is combined with the recovered positive electrode plate, which is also beneficial to enhance the cycle performance of the secondary battery including the separator and the positive electrode plate.

In any embodiment of the present application, after the secondary battery is formed, a ratio of a molar amount n1 of the lithium-containing positive electrode active material in the positive electrode active material film layer to a molar amount n2 of the lithium element in the lithium-rich particles in the coating is (0.2-50):1, and optionally, (20-40):1. By adding the lithium-rich particles, the molar amount n1 in the positive electrode active material film layer and the molar amount n2 of the lithium element therein in the coating are within the above range, which is beneficial to replenishing lithium for the recovered positive electrode plate and good for the cycle performance of the secondary battery.

In a fifth aspect, an embodiment of the present application provides a method for preparing a secondary battery, including:
providing a separator in the first aspect or a separator prepared by the method in the second aspect or the third aspect, where the separator includes a first microporous base membrane, a second microporous base membrane, and a coating arranged between the first microporous base membrane and the second microporous base membrane, and the coating contains lithium-rich particles, where a ratio of an average particle size Dv50 of the lithium-rich particles to a thickness of the coating is 1:(1-15); and
preparing a secondary battery including the separator and a recovered positive electrode plate.

Compared with a normal positive electrode plate, the active lithium ions in the positive electrode plate in the recovered battery have a certain amount of lithium loss. By using the secondary battery obtained by the preparation method in the embodiment of the present application, during the formation and subsequent charge and discharge processes of the secondary battery including the electrode assembly, lithium ions generated after the decomposition of the lithium-rich particles can replenish lithium ions consumed by the positive electrode active material film layer in the recovered battery, which is beneficial to restore the capacity of the battery, thereby enhancing the cycle performance of the secondary battery including the separator.

In any embodiment of the present application, the positive electrode plate includes a lithium-containing positive electrode active material, and a ratio of a total molar amount n3 of the lithium-containing positive electrode active material in the positive electrode active material film layer to a total molar amount n4 of the lithium element in the lithium-rich particles in the coating is (0.2-1.5):1, and optionally, (0.5-1.2):1. By adding the lithium-rich particles, the molar amount n1 in the positive electrode active material film layer and the molar amount n2 of the lithium element therein in the coating are within the above range, which is beneficial to replenishing lithium for the recovered positive electrode plate and good for the cycle performance of the secondary battery.

In a sixth aspect, an embodiment of the present application provides an electrical apparatus, including the secondary battery in the fifth aspect.

The technical solution of the embodiment of the present application controls an average particle size Dv50 of lithium-rich particles in a separator and a thickness of a coating to be within the above range, and the lithium-rich particles are oxidatively decomposed during the formation and subsequent charge and discharge processes, which may increase a porosity of the separator, reduce an ionic resistance of a battery cell, and enhance the kinetic performance of the secondary battery. In addition, lithium ions generated after the decomposition of the lithium-rich particles are beneficial to maintain a lithium content of an electrode plate and maintain a capacity of the secondary battery, thereby enhancing the cycle performance of the secondary battery including the separator. The electrical apparatus of the present application includes the secondary battery provided by the present application, and thus advantages the same as those of the secondary battery are achieved at least.

### BRIEF DESCRIPTION OF THE DRAWINGS

To more clearly illustrate the technical solutions of embodiments of the present application, the following provides a brief description of the accompanying drawings used in the embodiments of the present application. Apparently, the drawings described below are merely some embodiments of the present application. For those of ordinary skill in the art, other drawings may also be obtained according to the accompanying drawings without creative effort.
FIG. 1 is a schematic diagram of a separator according to an embodiment of the present application.
FIG. 2 is a schematic diagram of a separator according to another embodiment of the present application.
FIG. 3 is a schematic diagram of a secondary battery according to an embodiment of the present application.
FIG. 4 is a schematic exploded view of the secondary battery shown in FIG. 3.
FIG. 5 is a schematic diagram of an electrical apparatus including the secondary battery of the present application as a power source according to an embodiment.

The accompanying drawings may not be drawn according to an actual scale.

### DETAILED DESCRIPTION

Hereinafter, embodiments of an electrode assembly and a preparation method thereof, a secondary battery, a battery module, a battery pack, and an electrical apparatus of the present application are described in detail and specifically disclosed with reference to the drawings as appropriate. However, there may be cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specifically stated, all embodiments and optional embodiments of the present application may be combined with each other to form new technical solutions, and such technical solutions should be considered as being included in the disclosure of the present application.

Unless otherwise specifically stated, all technical features and optional technical features of the present application may be combined with each other to form new technical solutions, and such technical solutions should be considered as being included in the disclosure of the present application.

Unless otherwise specifically stated, all steps in the present application may be performed sequentially or randomly, and are preferably performed sequentially. For example, the method includes steps (a) and (b), indicating that the method may include steps (a) and (b) performed sequentially, or may include steps (b) and (a) performed sequentially. For example, the reference to the method may further comprise step (c), meaning that step (c) may be added to the method in any order, for example, the method may comprise steps (a), (b) and (c), or may comprise steps (a), (c) and (b), or may comprise steps (c), (a) and (b), and so on.

Unless otherwise specifically stated, the "including" and "comprising" mentioned in the present application mean open-ended, or may be closed-ended. For example, the "comprising" and "including" may indicate that it is also possible to comprise or comprise other components not listed, and it is also possible to comprise or comprise only the listed components.

Unless otherwise specifically stated, the term "or" is inclusive in the present application. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

Unless otherwise particularly stated, in the present application, the terms "connected" and "connect" should be understood in a broad sense. For example, the connection may be fixed connection, detachable connection or integrated connection, or may be direct connection, indirect connection through an intermediate medium, or internal communication of two elements. For those of ordinary skill in the art, the specific meanings of the above terms in the present application may be understood according to specific situations.

Unless otherwise particularly stated, the term "attachment" refers to a connection such as adhesion or coating in the present application.

Unless otherwise particularly stated, in the present application, the terms "first", "second", "third", "fourth" and the like are used to distinguish different objects, not to describe a particular sequence or primary-secondary relationship.

Unless otherwise particularly stated, in the present application, the term "active ion" refers to ions that can be intercalated and deintercalated back and forth between a positive electrode and a negative electrode of a secondary battery, including but not limited to lithium ions.

In the present application, the phrase "a plurality of" means two or more (including two).

In the present application, the secondary battery may include a lithium-ion battery, which is not limited in embodiments of the present application. The secondary battery may be an aqueous battery or an oil-based battery, which is not limited in the embodiments of the present application. The secondary battery may be in a flat shape, a cuboid shape or another shape, which is not limited in the embodiments of the present application either.

The secondary battery also known as a rechargeable battery or a storage battery refers to a battery that can be used continually by activating an active material in a charging manner after the battery is discharged. The secondary battery usually includes an electrode assembly and an electrolyte, and the electrode assembly includes a positive electrode plate, a negative electrode plate and a separator. The positive electrode plate includes a positive electrode current collector and a positive electrode active material film layer, the positive electrode active material film layer is coated on a surface of the positive electrode current collector, and the positive electrode active material film layer includes a positive electrode active material. The negative electrode plate includes a negative electrode current collector and a negative electrode active material film layer, the negative electrode active material film layer is coated on a surface of the negative electrode current collector, and the negative electrode film layer includes a negative electrode active material. During charge and discharge process of the battery, active ions are back and forth (including intercalation and deintercalation, adsorption and the like) between the positive electrode plate and the negative electrode plate. The separator is arranged between the positive electrode plate and the negative electrode plate, and is used for preventing a short circuit between the positive electrode and the negative electrode while allowing the active ions to pass through. Therefore, a diaphragm is an important component of a lithium-ion battery, and performance of the diaphragm determines an electrode interface structure, an internal resistance, etc. of the battery, and affects the capacity, cycle performance and safety performance of the battery.

After multiple charge and discharge cycles, the active ions of the secondary battery are gradually consumed. For example, lithium ions deintercalated from the positive electrode active material film layer obtain electrons at the negative electrode and may be reduced to form metal elemental dendrites, which can no longer participate in the charge and discharge cycle. In this way, the positive electrode active material of the secondary battery may be gradually deactivated and the capacity may decrease continuously, resulting in that the secondary battery cannot continue to be used after a certain number of charge and discharge cycles. In order to improve the cycle performance of secondary battery, it is necessary to effectively replenish the active ions consumed during the charge and discharge process.

On the other hand, with increasingly wide application of the secondary batteries, a large amount of scrap secondary batteries, such as scrap power batteries, are generated. From an economic and environmental perspective, it is very necessary to safely and effectively recover the positive electrode materials in scrap power batteries. The conventional method of recovering positive electrode materials is to remove the positive electrode plates from the scrap secondary batteries, separate the active materials from the positive electrode plates, and then perform regeneration; and the regenerated positive electrode materials may be used to prepare new positive electrode plates. However, such a positive electrode material recovering method may actually be considered as a process of using deactivated positive electrode materials as raw materials to re-prepare positive electrode active materials, which still has great environmental and economic costs. If the positive electrode plates with reduced capacity in scrap secondary batteries can be directly recovered for preparing secondary batteries with acceptable cycle life, it will be a more cost-efficient recovering method.

In view of this, an embodiment of the present application provides an separator that can at least reduce or avoid adverse effects on the cycle performance of the battery due to a lithium-deficient positive electrode plate on the cycle performance of the battery during the charge and discharge process of the secondary battery, thereby improving the cycle performance of the secondary battery including the separator. In addition, when the separator provided in the embodiments of the present application is used to prepare a secondary battery, the positive electrode plate allows the use of positive electrode plates directly recovered from secondary batteries that have reached the end of their cycle life.

### Separator

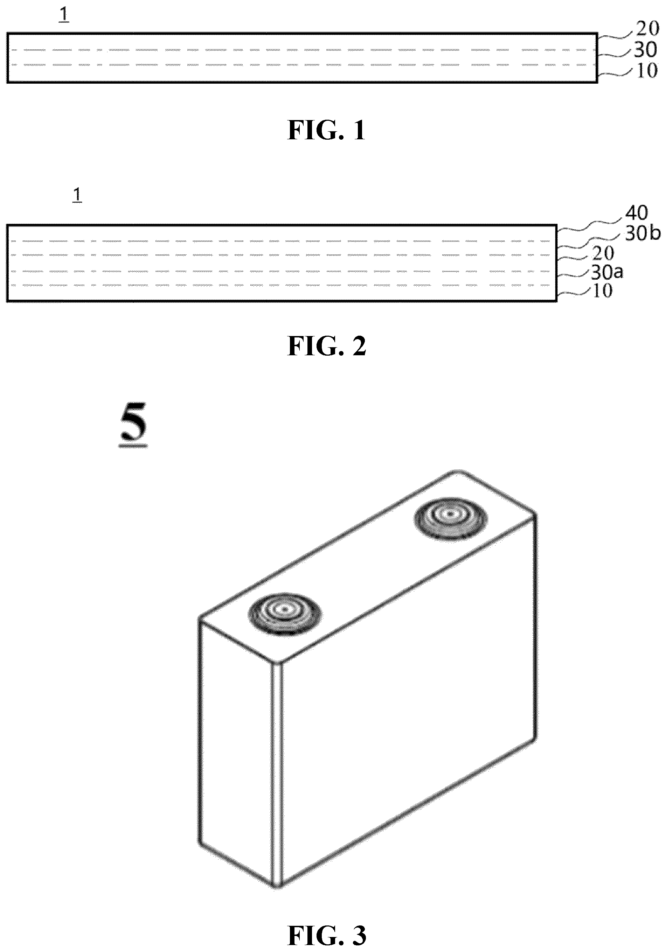

An embodiment of a separator according to the first aspect of the present application is described below with reference to FIG. 1. As shown in FIG. 1, the separator 1 includes:
a first microporous base membrane 10,
a second microporous base membrane 20, and
a coating 30 arranged between the first microporous base membrane 10 and the second microporous base membrane 20, where the coating includes lithium-rich particles, and a ratio of an average particle size Dv50 of the lithium-rich particles to a thickness of the coating is 1:(1-15)*.*

Optionally, the ratio of the average particle size Dv50 of the lithium-rich particles to the thickness of the coating is 1:(1.5-10), further optionally, 1:(1.2-3), for example, 1:(1.5-2.5). In some embodiments, the ratio of the average particle size Dv50 of the lithium-rich particles to the thickness of the coating is any ratio of 1:1, 1:2, 1:3, 1:4, 1:5, 1:6, 1:7, 1:8, 1:9, 1:10, 1:11, 1:12, 1:13, 1:14, or 1:15.

According to the technical solution of the embodiment of the present application, the coating of the separator contains lithium-rich particles, and the average particle size Dv50 of the lithium-rich particles and the thickness of the coating are within the above-specified range. When the separator is in the winding process or even when it is mechanically squeezed, the lithium-rich particles do not damage or puncture the first microporous base membrane and the second microporous base membrane, which is beneficial to improving the safety performance of a secondary battery containing the separator. In addition, during the formation and subsequent charge and discharge processes of the secondary battery including the separator of the embodiment of the present application, on the one hand, the lithium-rich particles may undergo oxidative decomposition or dissolution, and the vacancies generated by the decomposition increase the porosity of the separator, which is beneficial to improving the liquid absorption capacity and active ion permeability of the separator, reducing the internal resistance of a battery cell, and enhancing the kinetic performance of the secondary battery including the separator; and on the other hand, lithium ions generated after the decomposition of the lithium-rich particles can replenish lithium ions consumed in, for example, the formation and subsequent charge and discharge processes, which is beneficial to maintaining the capacity of the battery, thereby enhancing the cycle performance of the secondary battery including the separator.

In addition, when the separator of the embodiment of the present application is combined with a positive electrode plate obtained by disassembling a recovered battery after being charged and discharged, an electrode assembly including the separator and the positive electrode plate which is charged and discharged is obtained. The lithium ions generated after the decomposition of the lithium-rich particles in the separator can replenish lithium ions consumed by a positive electrode plate which is already charged and discharged, which is beneficial to restore the capacity of the secondary battery, thereby enhancing the cycle performance of the secondary battery including the separator.

In addition, vacancies generated by the decomposition of the lithium-rich particles can still keep a pore structure in the coating unchanged in a 105°C environment, which is good for the stability of the battery during long-term use.

The average particle size Dv50 of the lithium-rich particles, also known as the average volume particle size or median particle size, represents a particle size corresponding to 50% of the volume distribution of particles. Dv50 may be measured by using instruments and methods well known in the art, for example, a laser particle size analyzer such as a Mastersizer3000E laser particle size analyzer from Malvern Instruments Ltd., UK may be used for measurement.

In some embodiments, the average particle size Dv50 of the lithium-rich particles is in a range from 0.2 µm to 3 µm, optionally, 0.25 µm to 1 µm. In some embodiments, the average particle size Dv50 of the lithium-rich particles may be any numerical value of 0.2 µm, 0.3 µm, 0.4 µm, 0.5 µm, 0.6 µm, 0.7 µm, 0.8 µm, 0.9 µm, 1.0 µm, 1.1 µm, 1.2 µm, 1.3 µm, 1.4 µm, 1.5 µm, 1.6 µm, 1.7 µm, 1.8 µm, 1.9 µm, 2.0 µm, 2.1 µm, 2.2 µm, 2.3 µm, 2.4 µm, 2.5 µm, 2.6 µm, 2.7 µm, 2.8 µm, 2.9 µm, or 3.0 µm, or a range composed of them. When the average particle size Dv50 of the lithium-rich particles is within the above range, when the separator including the lithium-rich particles is formed and charged and discharged, the lithium-rich particles are oxidatively decomposed or dissolved to form voids, which can improve the void distribution of the coating in the separator to form voids with a particle size within the above range. The vacancies are beneficial to increase the porosity of the separator, reduce the internal ionic resistance of the battery cell, and enhance the kinetic performance of the secondary battery including the separator. When the average particle size Dv50 of the lithium-rich particles is within the above range, the damage to the coating of the separator after the decomposition of the lithium-rich particles may be reduced or avoided, thereby improving the safety performance of the secondary battery including the separator.

In some embodiments, the average particle size Dv90 of the lithium-rich particles is in a range from 0.5 µm to 2.5 µm, optionally, 0.5 µm to 2.0 µm. The average particle size Dv90 of the lithium-rich particles may also be any numerical value of 0.5 µm, 0.6 µm, 0.7 µm, 0.8 µm, 0.9 µm, 1.0 µm, 1.1 µm, 1.2 µm, 1.3 µm, 1.4 µm, 1.5 µm, 1.6 µm, 1.7 µm, 1.8 µm, 1.9 µm, 2.0 µm, 2.1 µm, 2.2 µm, 2.3 µm, 2.4 µm, or 2.5 µm, or a range composed of them. The average particle size Dv90 of the lithium-rich particles is within the above range. When the volume expansion of a negative electrode material extrudes the separator during the charge and discharge process of the secondary battery, extrusion or puncture on the first microporous base membrane or the second microporous base membrane by the lithium-rich particles may be further reduced or avoided, thereby improving the safety performance of the secondary battery including the separator.

In some embodiments, the average particle size Dv99 of the lithium-rich particles is in a range from 1 µm to 4 µm. In some embodiments, the average particle size Dv99 of the lithium-rich particles may be any numerical value of 1.0 µm, 1.1 µm, 1.2 µm, 1.3 µm, 1.4 µm, 1.5 µm, 1.6 µm, 1.7 µm, 1.8 µm, 1.9 µm, 2.0 µm, 2.1 µm, 2.2 µm, 2.3 µm, 2.4 µm, 2.5 µm, 2.6 µm, 2.7 µm, 2.8 µm, 2.9 µm, 3.0 µm, 3.1 µm, 3.2 µm, 3.3 µm, 3.4 µm, 3.5 µm, 3.6 µm, 3.7 µm, 3.8 µm, 3.9 µm, or 4.0 µm, or a range composed of them. The average particle size Dv99 of the lithium-rich particles is within the above range. When the volume expansion of the negative electrode material extrudes the separator during the charge and discharge process of the secondary battery, the extrusion or puncture on the first microporous base membrane or the second microporous base membrane by the lithium-rich particles may be further reduced or avoided, thereby improving the safety performance of the battery.

The *particle size* distribution Dv99 and Dv90 of the lithium-rich particles have meanings well known in the art, the *particle size* distribution Dv99 represents *a particle size* corresponding to 99%of the volume distribution of positive electrode active material particles; and the *particle size* distribution Dv90 represents *a particle size* corresponding to 90% of the volume distribution of the positive electrode active material particles. The above *particle size* distributions may be measured by using instruments and methods known in the art. The measurement may be performed by using a laser particle size analyzer, such as a Mastersizer 3000E laser particle size analyzer from Malvern Instruments Ltd., UK.

In some embodiments, a mass percentage content of the lithium-rich particles in the coating is in a range from 5% to 90%, and optionally, 25% to 75%. In some embodiments, the mass percentage content of the lithium-rich particles in the coating is any numerical value of 5%, 10%, 15%, 20%, 25%, 30%, 35%, 40%, 45%, 50%, 55%, 60%, 65%, 70%, 75%, or 80%, or a range composed of them. When the separator including the lithium-rich particles is charged and discharged, the lithium-rich particles are oxidatively decomposed to form voids. The mass percentage content of the lithium-rich particles in the coating is within the above range, which can improve the void distribution of the coating in the separator, increase the porosity of the separator, reduce the internal resistance of the battery cell, and improve the kinetic performance of the secondary battery including the separator. In addition, the mass percentage content of the lithium-rich particles in the coating is within the above range, which can avoid or reduce the damage to the coating of the separator after the decomposition of the lithium-rich particles, and further improve the safety performance of the secondary battery including the separator.

The mass percentage content of the lithium-rich particles in the coating may be measured according to a method for testing an element content. The method includes:
soaking a diaphragm sample in an acetone solution, performing ultrasound for 3 h at 40°C to separate a diaphragm from a coating, and collecting an acetone mixed solution containing the coating; testing an element content in the mixed solution by using an inductively coupled plasma optical emission spectrometer (ICP-OES); and outputting a mass percentage of each element.

In some embodiments, a volume percentage content of lithium-rich particles in the coating is in a range from 10% to 90%. When the separator containing the lithium-rich particles is charged and discharged, the lithium-rich particles are oxidatively decomposed or dissolved to form voids. The volume percentage content of the lithium-rich particles in the coating is within the above range, which may increase the corresponding porosity of the coating of the separator, reduce the internal resistance of the battery cell, and improve the kinetic performance of the secondary battery including the separator.

In some embodiments, the lithium-rich particles include a lithium salt or a lithium-containing composite oxide having a layered structure, a spinel structure or an olivine structure. The lithium-rich particles having the above structure may effectively maintain a structure of the coating, avoid structural collapse caused by vacancies caused by the oxidative decomposition of the lithium-rich particles, improve the stability of the coating, also improve the porosity and the air permeability of the coating, reduce the internal ionic resistance of the battery cell and improve the kinetic performance of the secondary battery including the separator.

In any embodiment of the present application, the lithium-rich particles include one or more of Li2C2O4, LiOH, Li15Si4 and Li4Sn. The lithium-rich particles of the above structure may be decomposed during battery formation, which is beneficial to improving the porosity and air permeability of the coating, reducing the internal ionic resistance of the battery cell, and improving the kinetic performance of the secondary battery including the separator.

In some embodiments, the lithium-rich particles may be of a layered structure, which allows lithium ions to diffuse in a two-dimensional space, or may also be of a spinel structure, which allows the lithium ions to diffuse in a three-dimensional space. Optionally, the lithium-rich particles may be selected from one or more of lithium transition metal oxides and compounds obtained by adding other transition metals or non-transition metals or non-metals to the lithium transition metal oxides.

In some embodiments, the lithium-rich particles have a core-shell structure, where a core includes a lithium salt or a lithium-containing composite oxide of a layered structure; and a shell includes one or more of carbon and silicon oxide. The lithium-rich particles have the core-shell structure. The shell includes one or more of carbon and silicon oxides, has a certain flexibility and wraps the lithium salt or composite oxide, which may prevent an edge of the lithium salt or composite oxide from scratching or puncturing the first microporous base membrane and the second microporous base membrane, further avoid a phenomenon of short circuit of the secondary battery including the separator, and improve its safety performance.

In some embodiments, the lithium salt or lithium-containing composite oxide having the layered structure includes one or more of LiₓMO_{y} and Liₓ [M_{b}A_{d}]O_{y}, where M includes one or more of Mn, Co, and Ni metal, A includes one or more elements of Al, Fe, V, Mg, Ca, Sr, and Ga, x is 0.8 to 2.2, y is 1.8 to 3.2, b>0, d>0, and b+d =1.

During the formation and charge and discharge processes of the battery having the separator according to the present embodiment, A may exist as a doping element in a lithium salt such as Liₓ [M_{b}A_{d}] O_{y}, and may serve as an element that may change a valence state in a layered metal oxide. Lithium-rich particles of the lithium salt such as the LiₓMO_{y} and Liₓ [M_{b}A_{d}]O_{y} included in the lithium salt or lithium-containing composite oxide having the layered structure may undergo oxidative decomposition, and no decomposed product harmful to the battery performance does not remain; the vacancies generated by the decomposition increase the porosity of the separator, the structure of the coating in the separator may be effectively maintained, the internal resistance of the battery cell is reduced, and thus the kinetic performance of the secondary battery including the separator is improved; and in addition, the lithium ions generated by the decomposition of the lithium-rich particles are beneficial to maintain or restore the capacity of the battery, maintain a lithium content of an electrode plate, and thus enhance the cycle performance of the secondary battery including the separator.

In some embodiments, the lithium-rich particles may be selected from one or more of a lithium-cobalt oxide, a lithium-silver oxide, a lithium-gold oxide, a lithium-silver-gold oxide, a lithium-silver-cobalt-gold oxide, a lithium-silver-cobalt-aluminum oxide, and a lithium-containing phosphate of an olivine structure.

In some embodiments, the lithium salt or composite oxide of the olivine structure includes a lithium phosphate, and its general formula may be LiFei·nMnmNTnPCU, where m is 0 to 1, n is 0 to 1, 0<x+y<l, NT may be selected from one or more of other transition metal elements or non-transition metal elements except Fe and ¹M, and ¹M may be selected from one or more of Cr, Mg, Ti, Al, Zn, W, Nb, and Zr. More optionally, the lithium-containing phosphate of the olivine structure may be selected from one or more of lithium iron phosphate, lithium yttrium phosphate, and lithium iron gold phosphate.

There is no particular restriction on the specific type of lithium-rich particles, as long as they may intercalate or deintercalate lithium ions and decompose to form vacancies under a lower voltage window. In some embodiments, the lithium-rich particles may be C₂H₃LiO₄, Li₃N, Li₂O₂, Li₂S, -OLi and other lithium-containing compounds.

In some embodiments, the first microporous base membrane and the second microporous base membrane respectively include one or more of a polyolefin film, a non-woven fabric film, a polyester film, a polyether film, a polyetherimide film, and a fluorinated polyetherimide film. Materials of the first microporous base membrane and the second microporous base membrane are selected from the above materials, which have good strength and toughness, so that the separator has a high capability of resisting puncturing by foreign particles or the lithium-rich particles, thereby improving the safety performance of the secondary battery including the separator.

In some embodiments, the first microporous base membrane and the second microporous base membrane each have a thickness ranging from 3 µm to 20 µm. The thickness of the first microporous base membrane and the thickness of the second microporous base membrane may each be any numerical value of 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, or 20 µm, or a range composed of them. There is an appropriate thickness, so the separator has an appropriate total thickness, which helps to reduce a size and weight of the secondary battery, and may improve the safety performance of the secondary battery including the separator.

In some embodiments, the first microporous base membrane and the second microporous base membrane each have a porosity ranging from 30% to 70%. The first microporous base membrane and the second microporous base membrane each have the above porosity, which may allow the first microporous base membrane and the second microporous base membrane to fully absorb and penetrate an electrolyte, so that the coating between the first microporous base membrane and the second microporous base membrane may be fully in contact with the electrolyte, and the lithium-rich particles may be quickly oxidatively decomposed in the presence of the electrolyte to form vacancies. Therefore, the separator according to the present embodiment can ensure rapid transmission of active ions including lithium ions, thereby improving the kinetic performance of the secondary battery including the separator.

In some embodiments, the coating has a thickness ranging from 0.5 µm to 20 µm. The thickness of the coating may be any numerical value of 0.5 µm, 0.6 µm, 0.7 µm, 0.8 µm, 0.9 µm, 1.0 µm, 1.1 µm, 1.2 µm, 1.3 µm, 1.4 µm, 1.5 µm, 1.6 µm, 1.7 µm, 1.8 µm, 1.9 µm, 2.0 µm, 5.0 µm, 6.0 µm, 7.0 µm, 8.0 µm, 9.0 µm, 10.0 µm, 12.0 µm, 15.0 µm, 18.0 µm, 19.0 µm, or 20.0 µm, or a range composed of any numerical value. The thickness of the coating is within the above range, which can make the separator have a suitable total thickness; it can allow a larger amount of lithium-rich particles to be added to the coating while still effectively embedding the added lithium-rich particles, thereby better achieving the lithium replenishment effect on the electrode plate.

In some embodiments, the coating includes a binder and ceramic particles. The coating including the ceramic particles and the binder enables the separator to have good mechanical strength and a "thermal shutdown" function, thereby improving the safety performance of the secondary battery including the separator.

In some embodiments, an average particle size Dv50 of the ceramic particles is in a range from 0.2 µm to 6 µm. The average particle size of the ceramic particles is within the above range, which may improve the uniformity of a surface of the coating in the separator, maintain the stability of the structure of the coating, and improve the safety performance of the secondary battery including the separator.

In some embodiments, a mass content of the ceramic particles in the coating is in a range from 20% to 60%. The mass content of the ceramic particles is within the above range, which may maintain the stability of the structure of the coating and improve the safety performance of the secondary battery including the separator.

In some embodiments, the ceramic particles may have a structure in a shape similar to villi on a microstructure. It has certain flexibility and elasticity, which may enhance the liquid absorption capacity of the separator.

In some embodiments, a mass content of the binder in the coating is in a range from 10% to 20%. The mass content of the binder in the coating is within the above range, which is beneficial to maintaining the stability of the structure of the coating and enhancing the adhesion between the first microporous base membrane and the coating and between the second microporous base membrane and the coating respectively, and a situation that vacancies in the coating caused by the decomposition of the lithium-rich particles during the charge and discharge process of the secondary battery including the separator separate the first microporous base membrane from the second microporous base membrane may be avoided.

The thickness of the first microporous base membrane, the thickness of the second microporous base membrane, the thickness of the separator, and the thickness of the coating have meanings well known in the art, and may be measured by using instruments and methods known in the art. An exemplary method for measuring the thickness of the separator is as follows: taking a sample of length 500mm × width 100mm; selecting 5 points uniformly on the sample (for example, selecting a point every 100 mm in a length direction of the sample), measuring the separator thickness at the 5 different positions by a deci-micrometer thickness gauge, and taking an average value as the thickness of the separator. The length direction of the sample is parallel to the TD direction of the separator. The thickness of the first microporous base membrane and the thickness of the second microporous base membrane may be measured with reference to the above-mentioned method. If one surface of the separator is provided with the coating, the thickness of the separator minus the thickness of the base membrane is the thickness of the coating. If the two opposite surfaces of the separator are respectively provided with a to-be-tested coating and a coating on a side opposite to the to-be-tested coating, the thickness of the separator minus the sum of the thickness of the base membrane and the thickness of the coating on the opposite side is the thickness of the to-be-tested coating.

In some embodiments, the porosity of the separator is in a range from 25% to 65%. The porosity of the separator is within an appropriate range, which is helpful for the separator to have an appropriate amount of electrolyte retention, thereby improving the kinetic performance of the secondary battery including the separator.

The porosity of the separator has a meaning well known in the art, and may be measured by using instruments and methods known in the art. The exemplary testing method is as follows:
for measuring the porosity of the separator by using a Micromeritics AUTOPOREV 9620 mercury intrusion instrument, the separator is filled with a certain amount of mercury liquid under compression, and then a ratio of a volume occupied by the mercury liquid to a volume of a material is measured to obtain the porosity of the separator.

In some embodiments, under the condition of testing for 1 h at 130°C, a thermal shrinkage rate of the separator in a machine direction (MD) is ≤5.0%, and a thermal shrinkage rate of the separator in a transverse direction (TD) is ≤5.0%. The test for the thermal shrinkage rate in the machine direction (MD) and in the transverse direction (TD) may refer to the national standard GB/T 36363-2018. The separator according to the embodiment of the present application has a composite structure of multiple film layers, which may enable the separator to have a smaller thermal shrinkage rate in the MD or TD. Therefore, even if the separator is damaged, a hole expansion rate of a damaged part under the heating condition is low. Therefore, even when the secondary battery including the separator is mechanically damaged by nail piercing or the like, the separator can still maintain a good separation effect, thus reducing the risk of thermal runaway of the secondary battery and improving the safety performance.

As an example, the testing method includes: cutting the separator into a sample which has a length lM0 of 100 mm in a direction MD and a length lT0 of 100 mm in a direction TD, where the direction MD of the sample is parallel to the direction MD of the separator, and the direction TD of the sample is parallel to the direction TD of the separator; putting the sample in a 130°C oven for heating for 1 h; and measuring the length lM in the direction MD or the length lT in the direction TD of the sample after heating, and calculating a thermal shrinkage rate in the direction MD or TD. The test may refer to the national standard GB/T 36363-2018.

In some embodiments, the separator has the air permeability ranging from 300 s/100cc to 500 s/100cc; and the air permeability of the separator is within the appropriate range, which facilitates passage of ions through the separator and thus helps the secondary battery to have a high capacity performance and cycle performance.

The air permeability of the separator refers to a degree to which an object or medium allows gas to pass through, and time for which a certain volume of gas (25 cubic centimeters (cc) to 300 cc) flows through a specific area of the sample is measured under a stable pressure. In the embodiment of the present application, the air permeability of the separator is measured by using an air permeability testing instrument with a product code of Gurley 4110N produced in USA. The testing method is: measuring time for which 100cc of air passes through a three-inch-diameter round area of the separator under a high pressure of a 4.88-inch water column, a unit of which is second (s).

In some embodiments, a tensile strength of the separator in the transverse direction (TD) is in a range from 1000 kg/cm² to 2000 kg/cm²; and a tensile strength of the separator in the transverse direction (TD) is within the appropriate range, high toughness and strength may be achieved in this direction, and even when the secondary battery having the separator is mechanically damaged by nail piecing and the like, the separator can still play a good role in separation, so the risk of occurrence of secondary thermal runaway may be reduced, and the safety performance is improved.

In some embodiments, the tensile strength of the separator in the machine direction (MD) is in a range from 1200 kg/cm2 to 1800 kg/cm2. The tensile strength of the separator in the machine direction (MD) is within the appropriate range, the high toughness and strength may be achieved in this direction, and even when the secondary battery having the separator is mechanically damaged by nail piercing and the like, the separator can still play a good role in separation, so the risk of occurrence of secondary thermal runaway may be reduced, and the safety performance is improved.

In some embodiments, a method for testing the tensile strength of the separator in the machine direction (MD) includes: taking five samples each of which has a length of 100 mm and a width of 15 mm in the direction MD of the base membrane, where the length direction of the sample is parallel to the direction MD of the base membrane; and respectively clamping the samples in two opposite fixtures of a tensile machine, setting a gauge length of the sample to be 40 mm (namely, a distance between the fixtures), and performing a tensile test at a constant speed of 50 mm/min. A force value F and a tensile displacement ΔL when the sample has tensile break are read. A unit-thickness stretching of each sample is calculated according to a unit-thickness stretching energy calculation formula.

In some embodiments, a peel strength between the coating and the first microporous base membrane is ≥50 N/m, (50 N/m to 1500 N/m), optionally, any one of 50 N/m to 1200 N/m, 150 N/m to 1000 N/m, 200 N/m to 800 N/m, 400 N/m to 700 N/m, and 500 N/m to 600 N/m. The peel strength between the coating and the first microporous base membrane is higher, so interlayer adhesion of the separator is good. Thus, the performance of the separator is further improved. The test may be performed by using the instruments and methods well known in the art. An exemplary testing method is as follows: binding the green glue and a surface of the coating of the separator; then cutting it to be a width w of 15 mm; performing 180° peeling on the coating and the base membrane at 50 mm/min; reading a maximum drawing force x(N) according to a data graph of the drawing force and displacement, and calculating according to F'=x/w to obtain the peel strength F'(N/m) between the coating and the base membrane. A tensile apparatus may be a tensile machine from GOTECH Testing Machines Inc., such as model AI-3000-S.

FIG. 2 is another embodiment of a separator according to a first aspect of the present application. As shown in FIG. 2, the separator 1 includes a first microporous base membrane 10, a second microporous base membrane 20, a first coating 30a arranged between the first microporous base membrane 10 and the second microporous base membrane 20, and also includes a third microporous base membrane 40 arranged on a side of the second microporous base membrane 20 facing away from the first microporous base membrane 10, and a second coating 30b arranged between the second microporous base membrane 20 and the third microporous base membrane 40. The above description of any embodiment of the first microporous base membrane 10 and the second microporous base membrane 20 is independently applicable to the first microporous base membrane 10, the second microporous base membrane 20 and the third microporous base membrane 40 in the present embodiment, which is not be repeated here. The above description of any embodiment of the coating 30 is independently applicable to the first coating 30a and the second coating 30b in the present embodiment, which is not be repeated here.

### Method for preparing a separator

In a second aspect, an embodiment of the present application provides a method for preparing a separator, including:
providing a slurry including lithium-rich particles;
providing a coating of the slurry between a first microporous base membrane and a second microporous base membrane; and
drying the slurry, and making a ratio of an average particle size Dv50 of the lithium-rich particles to a thickness of the dried coating be 1:(1-15), to obtain a separator in the first aspect.

According to the separator obtained by the preparation method of the present application, the average particle size Dv50 of the lithium-rich particles and the thickness of the coating are within the above ranges, and during the winding process of the separator, the lithium-rich particles do not damage or puncture the first microporous base membrane and the second microporous base membrane; during the formation and subsequent charge and discharge processes of the separator, on the one hand, the lithium-rich particles are oxidatively decomposed, and vacancies generated by the decomposition are beneficial to increase a porosity of the separator, an internal resistance of a battery cell is reduced, a liquid absorption capacity and a permeability of active ions are better enhanced, and the kinetic performance of a secondary battery including the separator is enhanced. In addition, the lithium ions generated after the decomposition of the lithium-rich particles are beneficial to maintain or restore the capacity of the battery, and to maintain a lithium content of an electrode plate, thereby enhancing the cycle performance of the secondary battery including the separator.

### Secondary battery

In a fourth aspect, an embodiment of the present application provides a secondary battery, including the separator in the first aspect or the second aspect, or a separator obtained by the preparation method in the third aspect. The present application has no particular limitation on the type of secondary battery. For example, the secondary battery may be a lithium-ion battery.

In some embodiments, the secondary battery includes a positive electrode plate containing a positive electrode active material film layer, and the positive electrode active material film layer contains a lithium-containing positive electrode active material; and a ratio of a mass percentage content W1 of the lithium-containing positive electrode active material in the positive electrode active material film layer to a mass percentage content W2 of lithium-rich particles in a coating is (1.01-1.5):1. For an electrode assembly of the embodiment of the present application, by controlling the ratio of W1 to W2 to be within the above range, when the secondary battery is formed, lithium ions generated after the decomposition of the lithium-rich particles may participate in the pre-lithiation of a negative electrode plate and the formation of an SEI film, thereby reducing the consumption of lithium ions in the positive electrode active material film layer; and during the formation and subsequent charge and discharge processes of the secondary battery, the lithium ions generated after the decomposition of the lithium-rich particles can replenish the lithium ions consumed in the positive electrode active material film layer during the formation and subsequent charge and discharge processes, which is beneficial to maintain the capacity of the battery, thereby enhancing the cycle performance of the secondary battery including the separator.

In some embodiments, a ratio of the mass percentage content W1 of the lithium-containing positive electrode active material in the positive electrode active material film layer to a mass percentage content W3 of a lithium element in the lithium-rich particles in the coating is (1.34-1.82):1.

For the secondary battery of the embodiment of the present application, by controlling the ratio of W1 to W3 to be within the above range, when the secondary battery is formed, lithium ions generated after the decomposition of the lithium-rich particles may participate in the pre-lithiation of the negative electrode plate and the formation of the SEI film, thereby reducing the consumption of lithium ions in the positive electrode active material film layer; and during the formation and subsequent charge and discharge processes of the secondary battery, the lithium ions generated after the decomposition of the lithium-rich particles can replenish the lithium ions consumed in the positive electrode active material film layer during the formation and subsequent charge and discharge processes, which is beneficial to maintain the capacity of the battery, thereby enhancing the cycle performance of the secondary battery including the separator.

In some embodiments, the mass percentage content W1 of the lithium-containing positive electrode active material in the positive electrode active material film layer is in a range from 70% to 95%. The mass percentage content W1 of the lithium-containing positive electrode active material in the positive electrode active material film layer is within the above range, which is beneficial to the cycle performance of the secondary battery.

In some embodiments, the secondary battery includes a positive electrode plate and a negative electrode plate, and a ratio of an area capacity of the positive electrode plate to an area capacity of the negative electrode plate is (1.02-1.12):1. In some embodiments, the ratio of the area capacity of the positive electrode plate to the area capacity of the negative electrode plate may be any ratio of 1.03:1, 1.04:1, 1.05:1, 1.06:1, 1.07:1, 1.08:1, 1.09:1, 1.1:1, 1.11:1, or 1.12:1. In the present embodiment, by designing the ratio of the area capacity of the positive electrode plate and the area capacity of the negative electrode plate to be within the above range, the ratio of the area capacity of the positive electrode plate and the area capacity of the negative electrode plate is within the above range, when the secondary battery including the electrode assembly is formed, it helps the negative electrode plate to achieve pre-lithiation, promotes the formation of the SEI film of the negative electrode plate, and is beneficial to improve the cycle stability and safety of the secondary battery.

In some embodiments, the secondary battery includes the positive electrode plate and the negative electrode plate, and a ratio of a gram capacity of the positive electrode plate to a gram capacity of the negative electrode plate is (0.45-0.72):1. In some embodiments, the ratio of the gram capacity of the positive electrode plate to the gram capacity of the negative electrode plate may be any ratio of 0.46:1, 0.47:1, 0.48:1, 0.49:1, 0.50:1, 0.55:1, 0.60:1, 0.65:1, 0.70:1, 0.71:1, or 0.72:1. By designing the ratio of the gram capacity of the positive electrode plate to the gram capacity of negative electrode plate to be within the above range, it helps to combine active ions in the positive electrode plate with a negative electrode material in the negative electrode plate, thereby improving the kinetic performance of the secondary battery including the positive electrode plate and the negative electrode plate.

In some embodiments, the secondary battery includes a recovered positive electrode plate. The recovered positive electrode plate is a positive electrode plate of a directly recovered secondary battery that reaches the service life after a long period of cycle. Since the capacity fading of the secondary battery includes multiple reasons such as the loss of active lithium, structural defects of a negative electrode, and structural defects of a positive electrode, in view of the high value of the positive electrode plate, the lithium-replenishing separator of the embodiment of the present application is used for some structurally stable positive electrode plates. During the formation and subsequent charge and discharge processes of the secondary battery including the electrode assembly, the lithium ions generated after the decomposition of the lithium-rich particles can replenish and recover the lithium ions consumed by the positive electrode active material film layer in the battery, which is beneficial to restore the capacity of the battery, thereby obtaining a secondary battery with acceptable cycle performance.

In any embodiment of the present application, the secondary battery includes a recovered positive electrode plate, the recovered positive electrode plate includes a charged and discharged positive electrode active material film layer, and the positive electrode active material film layer includes a lithium-containing positive electrode active material. When the positive electrode plate in an electrode assembly is a positive electrode plate that has been charged and discharged, it may be a positive electrode plate from a recovered battery. Compared with a normal positive electrode plate, the active lithium ions in the positive electrode plate in the recovered battery have a certain amount of lithium loss. By using the separator of the embodiment of the present application, during the formation and subsequent charge and discharge processes of the secondary battery including the electrode assembly, lithium ions generated after the decomposition of lithium-rich particles can replenish lithium ions consumed by the positive electrode active material film layer in the recovered battery, which is beneficial to restore the capacity of the battery, thereby enhancing the cycle performance of the secondary battery including the separator.

In any embodiment of the present application, the lithium-containing positive electrode active material includes a lithium iron phosphate material, the lithium iron phosphate material includes a mixed crystal phase of LFP and FPO in a state of being discharged to 0%, and a molar ratio of an LFP crystal phase to an FPO crystal phase is 97:(3-97).

According to the embodiment of the present application, the LFP crystal phase may be Li_{X}Fe_{y}PO₄ normal crystal phase 0<x≤1, 0<x≤1. As an example, the LFP crystal phase may be a crystal phase of LiFePO₄ that can normally deintercalate active lithium ions, and the FPO crystal phase is a defective crystal phase of Li_{X}Fe_{y}PO₄. After long cycles, the collapse of an iron-lithium structure causes Li_{X}Fe_{y}PO₄ to be unable to intercalate lithium normally.

In the recovered positive electrode plate, there is a certain amount of loss of a lithium element in the lithium-containing positive electrode active material, a structural phase change of the lithium-containing positive electrode active material is within the above range, and combination with the separator containing the lithium-rich particles in the embodiment of the present application is allowed. The recovered positive electrode plate may be utilized. The separator of the embodiment of the present application is combined with the recovered positive electrode plate, which is also beneficial to enhance the cycle performance of the secondary battery including the separator and the positive electrode plate.

The molar ratio of the LFP crystal phase to the FPO crystal phase may be measured according to a common method in the art. As an example, the lithium iron phosphate material is LiFePO₄. A valence state of an Fe element in the crystal phase that can normally deintercalate active lithium ions is different from a valence state of an Fe element in the FPO crystal phase. The molar ratio may be determined by testing contents of elements with different valence states by using an inductively coupled plasma optical emission spectrometer (ICP-OES). The molar ratio of the LFP crystal phase to the FPO crystal phase is determined according to the molar ratio of elements with different valence states.

In some embodiments, the recovered positive electrode plate includes a charged and discharged positive electrode active material film layer, where the positive electrode active material film layer includes a lithium-containing positive electrode active material; and the mass percentage W1 of the lithium-containing positive electrode active material in the charged and discharged positive electrode active material film layer is in a range from 5% to 90%. The mass percentage W1 of the lithium-containing positive electrode active material in the charged and discharged positive electrode active material film layer is any numerical value of 5%, 6%, 7%, 8%, 9%, 10%, 15%, 20%, 25%, 30%, 35%, 40%, 45%, 50%, 55%, 60%, 65%, 70%, 75%, 80%, 85%, 86%, 87%, 88%, 89%, or 90%, or a range composed of them. In the charged and discharged positive electrode plate, there is a certain amount of loss of lithium element in the lithium-containing positive electrode active material. The mass percentage W1 of the lithium-containing positive electrode active material in the charged and discharged positive electrode active material film layer is within the above range, which may be combined with the separator containing lithium-rich particles in the embodiment of the present application to enhance the cycle performance of the secondary battery including the separator and the positive electrode plate.

In some embodiments, the recovered positive electrode plate includes the charged and discharged positive electrode active material film layer, and the positive electrode active material film layer includes a lithium-containing positive electrode active material; and the ratio of the mass percentage content W1 of the lithium-containing positive electrode active material in the charged and discharged positive electrode active material film layer to the mass percentage content W2 of the lithium-rich particles in the coating is (0.09-1.5): 1. The ratio of W1 to W2 may be any numerical value of 0.09:1, 0.1:1, 0.5:1, 0.8:1, 1.03:1, 1.04:1, 1.05:1, 1.06:1, 1.07:1, 1.08:1, 1.09:1, 1.1:1, 1.2:1, 1.3:1, 1.4:1, or 1.5:1. In the recovered positive electrode plate, there is a certain amount of loss of lithium element in the lithium-containing positive electrode active material. The ratio of W1 to W2 is within the above range, which may be combined with the separator of the embodiment of the present application. During the formation and subsequent charge and discharge processes of the secondary battery including the electrode assembly, the lithium ions generated after the decomposition of the lithium-rich particles in the separator can replenish the lithium ions consumed by the positive electrode active material film layer in the recovered battery, which is beneficial to restore the capacity of the battery, thereby enhancing the cycle performance of the secondary battery including the separator and the positive electrode plate.

In some embodiments, after the secondary battery is formed, a ratio of a molar amount n1 of the lithium-containing positive electrode active material in the positive electrode active material film layer to a molar amount n2 of the lithium element in the lithium-rich particles in the coating is (0.2-2):1, optionally, (0.2-50):1; and optionally, (20-40):1. By adding the lithium-rich particles, the molar amount n1 in the positive electrode active material film layer and the molar amount n2 of the lithium element therein in the coating are within the above range, which is beneficial to replenishing lithium for the recovered positive electrode plate and good for the cycle performance of the secondary battery.

In a fifth aspect, an embodiment of the present application provides a method for preparing a secondary battery, including:
providing a separator in the first aspect or a separator prepared by the method in the second aspect or the third aspect, where the separator includes a first microporous base membrane, a second microporous base membrane, and a coating arranged between the first microporous base membrane and the second microporous base membrane, and the coating contains lithium-rich particles, where a ratio of an average particle size Dv50 of the lithium-rich particles to a thickness of the coating is 1:(1-15); and
preparing a secondary battery including the separator and a recovered positive electrode plate.

Compared with a normal positive electrode plate, the active lithium ions in the positive electrode plate in the recovered battery have a certain amount of lithium loss. By using the secondary battery obtained by the preparation method in the embodiment of the present application, during the formation and subsequent charge and discharge processes of the secondary battery including the electrode assembly, lithium ions generated after the decomposition of the lithium-rich particles can replenish lithium ions consumed by the positive electrode active material film layer in the recovered battery, which is beneficial to restore the capacity of the battery, thereby enhancing the cycle performance of the secondary battery including the separator.

In some embodiments, the positive electrode plate includes the lithium-containing positive electrode active material, and a ratio of a total molar amount n3 of the lithium-containing positive electrode active material in the positive electrode active material film layer to a total molar amount n4 of the lithium element in the lithium-rich particles in the coating is (0.2-1.5):1, and optionally, (0.5-1.2):1. By adding the lithium-rich particles, the molar amount n1 in the positive electrode active material film layer and the molar amount n2 of the lithium element therein in the coating are within the above range, which is beneficial to replenishing lithium for the recovered positive electrode plate and good for the cycle performance of the secondary battery.

In addition to the above-mentioned technical features, the secondary battery may have related features for understanding by referring to the following description.

### [Negative electrode plate]

The specific composition and structure of the negative electrode plate may be selected according to a type of a battery cell, which is not limited in the embodiments of the present application.

For example, when a battery cell is a lithium-ion battery cell, the negative electrode plate includes a negative electrode current collector and a negative electrode film layer arranged on at least one surface of the negative electrode current collector and including a negative electrode active material. For example, the negative electrode current collector has two surfaces opposite in its own thickness direction, and the negative electrode film layer is arranged on either or both of the two opposite surfaces of the negative electrode current collector.

The negative electrode active material is a material that can deintercalate and intercalate active ions (such as lithium ions, etc.), and the negative electrode active material may be a material known in the art. As an example, the negative electrode active material includes, but not limited to, one or more of natural graphite, artificial graphite, soft carbon, hard carbon, a silica-based material, a tin-based material and lithium titanate. The silicon-based material may include one or more of elemental silicon, silicon oxide, silicon-carbon composite, silicon-nitrogen composite, and silicon alloy material. The tin-based material may include one or more of elemental tin, tin oxide, and tin alloy material. The present application is not limited to these materials, and other conventionally known materials that may be used as negative electrode active materials may also be used.

In some embodiments, the negative electrode film layer further optionally includes a negative electrode conductive agent. The present application has no particular limitation on a type of the negative electrode conductive agent. As an example, the negative electrode conductive agent may include one or more of superconducting carbon, conductive graphite, acetylene black, carbon black, Ketjen black, carbon dots, carbon nanotubes, graphene, and carbon nanofibers.

In some embodiments, the negative electrode film layer further optionally includes a negative electrode binder. The present application has no particular limitation on a type of the negative electrode binder. As an example, the negative electrode binder may include one or more of styrene butadiene rubber (SBR), water-soluble unsaturated resin SR-1B, water-based acrylic resin (such as polyacrylic acid (PAA), polymethacrylic acid (PMAA), and polyacrylic acid sodium (PAAS)), polyacrylamide (PAM), polyvinyl alcohol (PVA), sodium alginate (SA), and carboxymethyl chitosan (CMCS).

In some embodiments, the negative electrode film layer further optionally includes other auxiliaries. As an example, the other auxiliaries may include thickeners, such as, carboxymethyl cellulose sodium (CMC-Na), a PTC thermistor material, and the like.

In some embodiments, the negative electrode current collector may be a metal foil or a composite current collector. As an example of the metal foil, a copper foil may be used. The composite current collector may include a high molecular material substrate layer and a metal material layer formed on at least one surface of the high molecular material substrate layer. As an example, the metal material may include one or more of copper, a copper alloy, nickel, a nickel alloy, titanium, a titanium alloy, silver, and a silver alloy. As an example, the high molecular material substrate layer may include one or more of polypropylene (PP), polyethylene terephthalate (PET), polybutylene terephthalate (PBT), polystyrene (PS), and polyethylene (PE).

The negative electrode film layer is usually formed by coating a negative electrode slurry on the negative electrode current collector, followed by drying and cold pressing. The negative electrode slurry is generally formed by dispersing the negative electrode active material, the optional conductive agent, the optional binder, and the other optional auxiliaries in a solvent and uniformly stirring a mixture. The solvent may be N-methyl pyrrolidone (NMP) or deionized water, but not limited thereto.

The negative electrode plate does not exclude other additional functional layers other than the negative electrode film layer. For example, in some embodiments, the negative electrode plate in the present application may further include a conductive primer coating (e.g., composed of a conductive agent and a binder) sandwiched between the negative electrode current collector and the negative electrode film layer and arranged on a surface of the negative electrode current collector. In some embodiments, the negative electrode plate in the present application may further include a protection layer covering a surface of the negative electrode film layer.

When the battery cell is a lithium metal battery cell, the negative electrode plate may not include a negative electrode active material capable of deintercalating and intercalating active ions. For example, in some embodiments, the negative electrode plate may include a lithium plate or a lithium alloy plate. In other embodiments, the negative electrode plate includes a mesh or foam three-dimensional skeleton layer, such as foam copper (or copper alloy), foam nickel (or nickel alloy), copper (or copper alloy) mesh, nickel (or nickel alloy) mesh, etc.

### [Positive electrode plate]

In some embodiments, the positive electrode plate includes a positive electrode current collector, and a positive electrode film layer arranged on at least one surface of the positive electrode current collector and including a positive electrode active material. For example, the positive electrode current collector has two surfaces opposite in its own thickness direction, and the positive electrode film layer is arranged on either or both of the two opposite surfaces of the positive electrode current collector.

The positive electrode film layer includes a positive electrode active material, and the positive electrode active material may be a positive electrode active material for a battery cell well known in the art.

For example, when the battery cell is a lithium-ion battery cell or a lithium metal battery cell, the positive electrode active material may include one or more of a lithium transition metal oxide, a lithium-containing phosphate of an olivine structure, and a modified compound thereof. Examples of the lithium transition metal oxide may include one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Examples of the lithium-containing phosphate of olivine structure may include one or more of lithium iron phosphate, composites of lithium iron phosphate and carbon, lithium manganese phosphate, composites of lithium manganese phosphate and carbon, lithium iron manganese phosphate, composites of lithium iron manganese phosphate and carbon, and modified compounds thereof. The present application is not limited to these materials, and other conventional known materials that can be used as positive electrode active materials may also be used.

In some embodiments, for further improving an energy density of the battery cell, the positive electrode active material may include one or more of a lithium transition metal oxide with a general formula of LiₐNi_{b}Co_{c}M_{d}OₑA_{f}, and modified compounds thereof. 0.8≤a≤1.2, 0.5≤b<1, 0<c<1, 0<d<1, 1≤e≤2, 0≤f≤1, M includes one or more of Mn, Al, Zr, Zn, Cu, Cr, Mg, Fe, V, Ti and B, and A includes one or more of N, F, S and Cl.

As an example, the positive electrode active material may include one or more of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄, and LiMnPO₄.

The modified compounds of the above positive electrode active materials may be obtained by performing doping modification and/or surface coating modification on the positive electrode active materials.

In some embodiments, the positive electrode film layer further optionally includes a positive electrode conductive agent. The present application has no particular limitation on a type of the positive electrode conductive agent. As an example, the positive electrode conductive agent includes one or more of superconducting carbon, conductive graphite, acetylene black, carbon black, Ketjen black, carbon dots, carbon nanotubes, graphene, and carbon nanofibers.

In some embodiments, the positive electrode film layer further optionally includes a positive electrode binder. The present application has no particular limitation on a type of the positive electrode binder. As an example, the positive electrode binder may include one or more of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorinated acrylate resin.

In some embodiments, the positive electrode current collector may be a metal foil or a composite current collector. As an example of the metal foil, an aluminum foil may be used. The composite current collector may include a high molecular material substrate layer and a metal material layer formed on at least one surface of the high molecular material substrate layer. As an example, the metal material may include one or more of aluminum, an aluminum alloy, nickel, a nickel alloy, titanium, a titanium alloy, silver, and a silver alloy. As an example, the high molecular material substrate layer may include one or more of polypropylene (PP), polyethylene terephthalate (PET), polybutylene terephthalate (PBT), polystyrene (PS), and polyethylene (PE).

The positive electrode film layer is usually formed by coating a positive electrode slurry on the positive electrode current collector, followed by drying and cold pressing. The positive electrode slurry is generally formed by dispersing the positive electrode active material, the optional conductive agent, the optional binder and any other components in a solvent and sufficiently stirring the mixture. The solvent may be N-methyl pyrrolidone (NMP), but is not limited thereto.

### [Preparation method]

The preparation method for a battery according to the present application is well known. In some embodiments, a secondary battery cell may be formed by assembling a positive electrode plate, a separator, a negative electrode plate, and an electrolyte. As an example, the positive electrode plate, the separator, and the negative electrode plate may form an electrode assembly by a winding process and/or a stacking process; the electrode assembly is placed in an outer package; the electrolyte is injected after drying; and obtaining a battery cell through processes such as encapsulation, standing, formation, and shaping. A plurality of battery cells may be further connected in series, in parallel or in parallel-series connection to form a battery module. A plurality of battery modules may be further connected in series, in parallel or in parallel-series connection to form a battery pack. In some embodiments, the plurality of battery cells may also directly form a battery pack.

### [Electrolyte]

In some embodiments, the secondary battery includes an electrolyte. The electrolyte serves to conduct active ions between the positive electrode plate and the negative electrode plate. The type of the electrolyte is not specifically limited in the present application and may be selected according to needs. For example, the electrolyte may be selected from at least one of solid electrolyte and liquid electrolyte (namely, electrolyte solution).

In some embodiments, the electrolyte adopts an electrolyte solution. The electrolyte solution includes electrolyte salt and a solvent.

Types of the electrolyte salt are not specifically limited, and may be selected according to actual demands. For example, the electrolyte salt includes a lithium salt selected from those used in the lithium ion battery. As an example, the lithium salt includes and is selected from one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluoro bis(oxalato)phosphate (LiDFOP) and lithium tetrafluoro(oxalato)phosphate (LiTFOP). As an example, a sodium salt includes and is selected from one or more of NaPF₆, NaClO₄, NaBCl₄, NaSO₃CF₃, and Na(CH₃)C₆H₄SO₃.

The type of the solvent is not specifically limited and may be selected according to actual demands. In some embodiments, as an example, the solvent may include one or more selected from ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma-butyrolactone (GBL), sulfolane (SF), methylsulfonylmethane (MSM), ethyl methyl sulfone (EMS) and ethylsulfonylethane (ESE).

In some embodiments, the electrolyte solution further optionally includes an additive. For example, the additive may include a negative electrode film-forming additive, or may include a positive electrode film-forming additive, or may further include an additive capable of improving certain performance of a battery, such as an additive for improving an overcharging performance of the battery, an additive for improving a high temperature performance of the battery, and an additive for improving a low temperature power performance of the battery.

In addition, the secondary battery may have various outer packaging and existing forms.

In some embodiments, the secondary battery may include an outer package. The outer package may be used to encapsulate the electrode assembly including the positive electrode plate, the negative electrode plate and the separator, and the electrolyte as described above.

In some embodiments, the outer package of the secondary battery may be a hard shell, such as a hard plastic shell, an aluminum shell and a steel shell. The outer package of the secondary battery may also be a soft package, such as a pouch-type soft package. A material of the soft package may be plastic, such as one or more of polypropylene (PP), polybutylene terephthalate (PBT), and polybutylene succinate (PBS).

A shape of the secondary battery is not particularly limited in the present application, and the secondary battery may be in a flat shape, a cuboid shape, or in another shape. For example, FIG. 3 is a secondary battery 5 of a cuboid structure as an example.

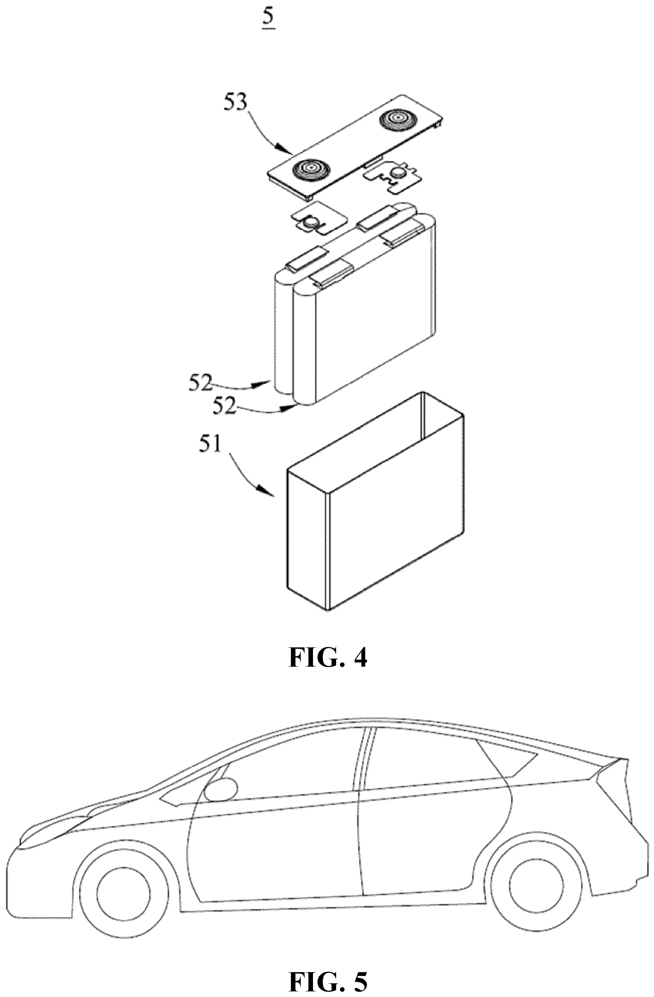

In some embodiments, as shown in FIG. 4, the outer package may include a housing 51 and a cover plate 53. The housing 51 may include a bottom plate and a side plate connected to the bottom plate, and the bottom plate and the side plate enclose to form an accommodating cavity. The housing 51 has an opening that communicates with the accommodating cavity, and the cover plate 53 is used to cover the opening to close the accommodating cavity. The electrode assembly 52 of the first aspect of the embodiment of the present application or the electrode assembly 52 prepared according to the method of the second aspect of the embodiment of the present application is encapsulated in the accommodating cavity. The electrode assembly 52 is impregnated with the electrolyte solution. One or more electrode assemblies 52 may be included in the secondary battery 5, which may be adjusted according to demands.

The preparation method for the secondary battery according to the present application is well known. In some embodiments, the electrode assembly may be put in the outer package and dried, then the electrolyte solution is injected, and the secondary battery is obtained after processes such as vacuum encapsulation, standing, formation, and shaping.

In some embodiments, the secondary battery may be assembled to form any one or more of a battery cell, a battery module or a battery pack.

In some embodiments of the present application, the secondary battery according to the present application may be assembled to form the battery module, and more secondary batteries may be included in the battery module, where the specific number may be adjusted according to application and capacity of the battery module.

Optionally, the battery module may further include a shell having an accommodating space, in which the plurality of secondary batteries is accommodated in the accommodating space.

In some embodiments, the aforementioned battery modules may further be assembled into the battery pack, and the number of battery modules included in the battery pack may be adjusted according to the application and capacity of the battery pack.

In some embodiments, the secondary batteries may be assembled to form the battery cell. The battery cells may be assembled to form the battery module. The battery modules may be assembled to form the battery pack.

In some embodiments, the secondary batteries may be assembled to form the battery cell, and the battery cells may be assembled to form the battery pack.

### Electrical apparatus

In a sixth aspect, an embodiment of the present application provides an electrical apparatus, including the secondary battery in the fifth aspect. The embodiment of the present application provides the electrical apparatus which may include at least one of the above battery cell, battery module, or battery pack.

In the present application, by controlling the average particle size Dv50 of the lithium-rich particles in the separator and the thickness of the coating to be within the above range, the porosity of the separator may be increased, the ionic resistance may be reduced, and the kinetic performance and cycle performance of the secondary battery may be enhanced. Under the combined influence of many properties such as the thermal shrinkage and air permeability of the separator, and the thermal stability and safety of the battery cell, the lithium-ion secondary battery and electrical device including the separator of the present application may obtain excellent performance.

The secondary battery may be used as a power source of the electrical apparatus, and may also be used as an energy storage unit of the electrical apparatus. The electrical apparatus may be, but is not limited to, a mobile device (such as a mobile phone, and a laptop), an electric vehicle (such as an all-electric vehicle, a hybrid electric vehicle, a plug-in hybrid electric vehicle, an electric bicycle, an electric scooter, an electric golf cart, and an electric truck), an electric train, a ship, a satellite, an energy storage system, etc.

FIG. 5 is a schematic diagram of an electrical apparatus as an example. The electrical apparatus is an all-electric vehicle, a hybrid electric vehicle, a plug-in hybrid electric vehicle, or the like. In order to meet the requirements of the electrical apparatus for high power and high energy density, a battery pack or a battery module may be used.

As another example, the electrical apparatus may be a mobile phone, a tablet, a laptop, etc. The electrical apparatus is generally required to be light and thin, and can use a secondary battery as a power source.

### Embodiment

The following embodiments more specifically describe the contents disclosed in the present application. These embodiments are intended for illustrative purposes only, because various modifications and changes made within the scope of the contents disclosed in the present application are apparent to those skilled in the art. Unless otherwise stated, all parts, percentages, and ratios reported in the following embodiments are based on mass, all reagents used in the embodiments are either commercially available or synthesized according to conventional methods, and may be directly used without further processing, and all the instruments used in the embodiments are commercially available.

### Embodiment 1

### Preparation of a separator

A first microporous base membrane and a second microporous base membrane are obtained by slitting commercial 5µm PE base membrane and 6µm PP base membrane purchased by Ningde Zhuogao New Material Technology Co., Ltd., and their porosity is 30%.

### Preparation of a coating film:

Lithium oxalate, aluminum oxide, polyacrylate, and carboxymethyl cellulose are uniformly mixed in a solvent (deionized water) at a mass ratio of 2.5:6.5:0.5:0.5 to form an aqueous slurry with a solid content of 25wt% and a viscosity of 100mPa·s, thereby preparing a lithium-replenishing slurry. The lithium-replenishing slurry is coated onto a 5µm polyethylene (PE) base membrane through a coating machine; another unwinding roller is a 6µm polypropylene (PP) base membrane; the slurry is applied to one surface of the PE base membrane by extrusion to form a wet coating with a thickness of about 15µm; the coating is then transferred to an oven and dried at 60°C for 2 minutes; and then reversing is performed on a roller to press the PP base membrane onto the wet coating at a pressure of 1000Mpa to obtain a composite diaphragm.

### Preparation of positive electrode plate

A 60Ah LFP square hard-shell battery cell from CATL (Contemporary Amperex Technology Co., Ltd.) is used; a positive electrode LFP plate is fully discharged after 3,000 cycles; and a lithium iron phosphate positive electrode active material with a structural formula LiFePO₄ is included.

### Preparation of negative electrode plate

97.5 parts by weight of a negative electrode active material artificial graphite, 1.5 parts by weight of a binder SBR and 1 part by weight of a thickener CMC-Na were added to deionized water, stirred and mixed uniformly, and then coated onto the surface of a Cu foil, oven dried, cold-pressed, and striped to obtain the negative electrode sheet.

### Preparation of electrolyte solution

11.9 parts by weight of lithium hexafluorophosphate is added to 88.1 parts by weight of a solution of EC and DEC (in a mass ratio of 1:1), and after uniformly stirring to fully dissolve, the electrolyte solution is obtained.

### Preparation of lithium-ion secondary battery

The positive electrode plate, separator and negative electrode plate obtained above are assembled into a laminated bare battery cell, placed in an aluminum-plastic film, vacuum-baked at 80°C for 8 h, and then the above electrolytic solution is injected for impregnation and formation activation to complete the preparation of the lithium-ion secondary battery.

### Embodiments 2 to 14

The preparation method is similar to that of Embodiment 1, except that the content and type of lithium-rich particles and the ratio of the average particle size Dv50 of the lithium-rich particles to the thickness of the coating are different, see Table 1 for details. When the content of lithium-rich particles changes, the content of aluminum oxide in the coating is adjusted so that the sum of the contents of lithium-rich particles and aluminum oxide in the coating is 90%.

### Embodiment 15

The difference between this embodiment and embodiment 1 lies in the preparation of the positive electrode plate, wherein the positive electrode active material is LiFePO₄, and the positive electrode plate is a freshly prepared positive electrode plate.

94 parts by weight of a positive electrode active material (lithium iron phosphate (LiFePO₄) material), 3 parts by weight of conductive carbon and 3 parts by weight of a binder PVDF are added into a solvent NMP, stirred and mixed uniformly, and then coated onto a surface of an Al foil, oven dried, cold-pressed, and striped to obtain the positive electrode plate, see Table 4 for details.

### Embodiments 16 to 24

The difference between this embodiment and Embodiment 1 is that: before and during the secondary battery is formed, a ratio of a total matter amount of an Li element in lithium-rich particles in a coating to a total matter amount of a positive electrode active material in a positive electrode active material film layer is controlled to be different during the preparation process. As shown in Table 3.

### Comparative example 1

This comparative example provides a double-layer composite diaphragm, using a PE microporous film with a thickness of 5 µm and a PP microporous film with a thickness of 6 µm as a substrate layer. First, polycarbosilane (PCS) is sprayed on a 5 µm PE surface on one side to obtain a polymer coating with a spraying amount of 0.5 mg/m2. To ensure consistency with the embodiment, it was first baked at 60° C. for 2 minutes and then pressed with the PP base membrane on the other side at a pressure of 1 MPa to obtain a coating composite diaphragm without lithium-rich particles.

### Comparative example 2

The preparation method is similar to that of Embodiment 1, except that there are no lithium-rich particles, and the particles are partially supplemented by aluminum oxide.

### Comparative examples 3 to 6

The difference from Embodiment 1 is that before and during formation of the secondary battery, a ratio of a total matter amount of an Li element in lithium-rich particles in a coating to a total matter amount of a positive electrode active material in a positive electrode active material film layer is controlled to be different during the preparation process. As shown in Table 3.

### Testing parts

1) Test method for average particle size Dv50, Dv90 and Dv99 of lithium-rich particles: according to GB/T 19077-2016, a laser particle size analyzer is used to measure the particle size distribution of lithium-rich particles. The processing method is to take a clean beaker, add an appropriate amount of the sample to be tested, add a surfactant dropwise, and then add a dispersant, and perform ultrasound at 120W/5min to ensure that the sample is completely dispersed in the dispersant. After the sample is poured into an injection tower, the sample is circulated to a test optical path system with a solution, scattered light emitted by particles under the irradiation of a laser beam is received, and the energy distribution thereof is measured, so a particle size distribution feature of the particles may be obtained (shading degree: 8%-12%).
2) Test method for separator and coating thickness: using a thickness gauge to test according to GB/T6672-2001 Film and plate Thickness Determination Method; where first, a thickness of a separator base membrane is defined as W1, and a thickness of a coating film after coating is defined as W1, and the coating thickness W3=W1-W2.
3) Test method for thermal shrinkage of separator: cutting the separator into a size of 100×50mm, putting it in an oven for 1 h at 130°C, and using a vernier caliper to measure a shrinkage degree of the separator in a tensile rate in a direction MD and a tensile rate in a direction TD. The separator of the embodiment is subjected to the above-mentioned test, and the structure is shown in Table 2.
4) Test method for tensile strength of separator: cutting the separator in MD and TD directions to obtain a plurality of 15mm×50mm samples, stretching them using a stretching machine until the samples are broken, and recording the tensile strength of the samples. The separator of the embodiment is subjected to the above-mentioned test, and the structure is shown in Table 2.
5) Test method for liquid absorption rate of separator: cutting the separator sample into 5cm×5cm square and weighing it; and then, soaking the separator in the electrolyte solution for 30 minutes, then taking it out, gently absorbing the electrolyte solution on the membrane surface with dust-free paper, and then performing weighing. The electrolyte solution used is 1 mol/L LiPF6 ethylene carbonate (EC) solution. Liquid absorption rate = (weight after soaking- weight before soaking) / weight before soaking × 100%. The separator of the embodiment is subjected to the above-mentioned test, and the structure is shown in Table 2.
6) Test method for air permeability of the separator: using a Gurley 4110N air permeability tester to test the air permeability of the separator. The testing method is: measuring time for which 100cc of air passes through a 3cm-diameter round area of the separator under a high pressure of a 4.88-inch water column, a unit of which is second (s). The separator of the embodiment is subjected to the above-mentioned test, and the structure is shown in Table 2.
7) Test method for a surface density of the separator: cutting the separator into a circle with a radius R of 50 mm, and calculating its surface density after weighing it using an electronic balance. The separator of the embodiment is subjected to the above-mentioned test, and the structure is shown in Table 2.
8) The method for testing a matter amount of the lithium element in the lithium-rich particle in the coating of the separator includes: washing the separator coating, mixing and grinding the material to be tested with conductive carbon and PVDF in a mass ratio of 8:1:1, preparing a positive electrode slurry, coating the slurry on an aluminum foil, and assembling it with a Li plate into a button half-cell. By charging and discharging the button cell assembled with the positive electrode lithium-rich material to be tested, the battery capacity and discharge time is measured, and an electric quantity of a positive electrode active substance in a single battery is calculated, Q = It, where Q is the electric quantity of the active substance, I is a current intensity, and t is discharge time. According to a stoichiometric relationship of an electrochemical equation, the electric quantity of the active substance is converted into an amount of the active substance, thereby calculating a content of the active substance, such as n = Q/FM, where n is the amount of the active substance, F is a Faraday constant, and M is a relative molecular mass of the active substance.
9) The method for testing the matter amount of Li substance in the positive electrode active material is similar to that of a lithium-rich coating material.
10) Method for testing a capacity recovery rate calibration and initial coulombic efficiency of the secondary battery: putting an unactivated battery in a test channel of the Chenhua electrochemical workstation, charging it at a constant current of 0.1C rate to a charge cut-off voltage of 3.65V, making it stand for 5 minutes, and then discharging it at a constant current of 1C rate to a discharge cut-off voltage of 2.25V. Discharge capacity/charge capacity = initial coulombic efficiency. Then charging at a constant current of 0.1C rate to a charge cut-off voltage of 3.65V is performed, and a reversible battery capacity of the activated battery is recorded. The capacity recovery rate is the last discharge capacity (of the secondary battery before the positive electrode plate is disassembled)/the discharge capacity (of the secondary battery with the positive electrode plate newly assembled).
11) Method for testing the kinetic performance of the secondary battery: using Chenhua electrochemical workstation to perform constant voltage AC impedance spectroscopy test on the diaphragm. An intercept where an impedance curve and a real part on a Nyquist plot intersect is taken as Rs, and compared with the known Rs parameter of the standard conductivity sample, an ionic conductivity is obtained.
12) Method for testing the cycle performance of the secondary battery: putting the battery in the test channel of the Chenhua electrochemical workstation, charging it at a constant current of 1C rate to a charge cut-off voltage of 3.65V, making it stand for 5 minutes, then discharging it at a constant current of 1C rate to a discharge cut-off voltage of 2.25V, recording a discharge capacity, and making it stand for another 5 minutes. After such a cycle, the cycle capacity retention ratio = capacity after cycle/capacity of the first cycle × 100%. In general, a ratio of a capacity after 500 cycles to the capacity of the first cycle is tested.

Based on the test results of Embodiments 1 to 14, it can be seen that under the lithium replenishment condition where a ratio of the matter amount of Li of the lithium-rich material to an amount of an LFP is 1:1, an old positive electrode plate is successfully activated and can achieve a capacity retention ratio of 94% after 500 cycles, which proves that a structure of an LFP positive electrode plate is relatively stable under long cycles, and a scrap positive electrode may be recovered through lithium replenishment of the diaphragm.

From the test results in Table 1, it can be seen that when the separator is in the winding process or even mechanically extruded, a ratio of the average particle size Dv50 of the lithium-rich particles to the thickness of the coating is within the above range, and the lithium-rich particles may not damage or puncture the first microporous base membrane and the second microporous base membrane, which is beneficial to improve the safety performance of the secondary battery including the separator. The separator includes a coating containing the lithium-rich particles. During the charge and discharge process of the battery including the separator, the lithium-rich particles gradually reach a decomposition voltage for decomposition under the action of the electrolyte solution. The vacancies generated by the decomposition are beneficial to increase the porosity of the separator, enhance the liquid absorption capability of the separator and the permeability of active ions, reduce the internal resistance of the battery cell, and enhance the kinetic performance of the secondary battery including the separator. In addition, lithium ions generated after the decomposition of the lithium-rich particles are beneficial to maintain or restore the capacity of the battery and maintain a lithium content of the electrode plate, thereby enhancing the cycle performance of the secondary battery including the separator.

It may be seen according to Table 1 that by comparing Embodiments 1 to 6 with Comparative examples 1 to 2, a large amount of lithium salt in the electrolyte solution is consumed in Comparative examples 1 to 2, resulting in an increase in the internal resistance of the battery and a deterioration in the cycle. As the amount of lithium replenishment in the embodiments increases, the initial coulombic efficiency gradually increases. Since the lithium-rich particles may play a role in replenishing active lithium ions consumed in the formation of an SEI film while replenishing the lithium of the positive electrode plate, and pre-lithiating of the negative electrode may be achieved while recovering the positive electrode plate.

It may be seen according to Table 1 that by comparing Embodiments 7 to 10 with Comparative examples 1 to 2, decomposition effects are different due to different decomposition voltages of different lithium-rich particles, but all of them improve the first efficiency and ionic conductivity while replenishing lithium for the positive electrode.

It may be seen according to Table 1 that by comparing Embodiments 11 to 14 with Comparative examples 1 to 2, there are lithium-rich coatings with different thicknesses and contents of aluminum oxide, and under the same capacity recovery effect, the thinner the coating is, the higher the ionic conductivity is, which is beneficial to the long cycle performance of the battery.

It may be seen according to the results of Comparative examples 1 to 2 in Table 1 that the positive electrode plates in Comparative examples 1 to 2 are recovered positive electrode plates with lithium deficiency, and if they are directly assembled to form the secondary battery by using conventional separators, normal charging fails. It may be seen according to Table 2 that by comparing Embodiments 1 to 6 with Comparative examples 1 to 2, the separator whose coating contains aluminum oxide has better heat resistance, and its mechanical property and the capability of being hydrophilic to the electrolyte solution are improved.

It may be seen according to Table 2 that by comparing Embodiments 7 to 10 with Comparative examples 1 to 2, the diaphragm whose lithium-rich particles is lithium silicide (Li2Si) has better air permeability, corresponding to the high ionic conductivity in Table 1, because of the lower decomposition voltage and pore-forming effect.

It may be seen according to Table 2 that by comparing Embodiments 11 to 14 with Comparative examples 1 to 2, the increase in the thickness of the coating is beneficial to improve the mechanical strength of the separator.

The ratio of the total matter amount of the Li element of the lithium-rich particles in the coating to the total matter amount of the positive electrode active material in the positive electrode active material film layer in Tables 2 and 3 is measured before the battery is formed. In Table 3, in the embodiments, before the secondary battery is formed, the ratio of the total matter amount of the Li element of the lithium-rich particles in the coating to the total matter amount of the positive electrode active material in the positive electrode active material film layer is (0.2-2): 1, and the capacity of the obtained battery meets the requirements, but in Comparative examples 3 to 6, the ratio of the matter amounts is larger, and the capacity of the obtained battery does not meet the standard, such as 500cycle/7%SOC, or causes a short circuit.

It should be noted that the present application is not limited to the above embodiments. The above embodiments are only examples, and embodiments that have the same composition and exert the same effect as the essence of technical ideas within the scope of the technical solutions of the present application are included in the technical scope of the present application. In addition, without departing from the scope of the primary intention of the present application, various modifications that can be conceived by those skilled in the art and are applied to the embodiments, and other modes constructed by combining some of the constituent elements of the embodiments are also included in the scope of the present application.

**Table 1**

| Number | First micropor ous base membrane | Second micropor ous base membrane | Lithium-rich particles in the separator coating | | Ratio of the particle sizeDv5 0 of lithium-rich particles to the thickness of the coating | Thickne ss of the coating of the separator | Ratio of the total matter amount of the Li element in the lithium-rich particles in the coating to the total matter amount of the positive electrode active material in the positive electrode active material film layer | Capacity recovery rate | Initial coulom bic efficien cy | Ionic conductiv ity S/m | cycle capacity retention ratio |
|---|---|---|---|---|---|---|---|---|---|---|---|
| | Type | Type | Type | Conte nt | | (µm) | | | | | |
| Comparat ive example 1 | PE | PP | / | / | / | 10 | / | 89% | 91.37% | 0. 1×10⁻³ | 5cycle/char ging failure |
| Comparat ive example 2 | PE | pp | / | / | / | 10 | / | 85% | 91.82% | 0.06×10⁻³ | 2cycle/char ging failure |
| Embodim ent 1 | PE | PP | Lithium Oxalate | 25% | 1:10 | 10 | 1:1 | 100% | 93.27% | 0.23×10⁻³ | 500cycle/9 2%SOC |
| Embodim ent 2 | PE | PP | Lithium Oxalate | 38% | 1:10 | 10 | 1:1 | 100% | 93.85% | 0.35×10⁻³ | 500cycle/9 4%SOC |
| Embodim ent 3 | PE | PP | Lithium Oxalate | 50% | 1:10 | 10 | 1:1 | 100% | 96.25% | 0.68×10⁻³ | 500cycle/9 6%SOC |
| Embodim ent 4 | PE | PP | Lithium Oxalate | 62% | 1:10 | 10 | 1:1 | 100% | **97.45%** | 0.57×10⁻³ | 500cycle/9 1%SOC |
| Embodim ent 5 | PE | PP | Lithium Oxalate | 80% | 1:10 | 10 | 1:1 | 100% | 98.37% | 0.64×10⁻³ | 500cycle/8 8%SOC |
| Embodim ent 6 | PE | PP | Lithium Oxalate | 90% | 1:10 | 10 | 1:1 | 100% | 99.71% | 0.69×10⁻³ | 500cycle/8 7%SOC |
| Embodim ent 7 | PE | PP | Lithium cobalt oxide | 37% | 1:10 | 10 | 1:1 | 100% | 95.52% | 0.52×10⁻³ | 500cycle/8 1%SOC |
| Embodim ent 8 | PE | PP | Lithium mangan ese oxide | 58% | 1:10 | 10 | 1:1 | 100% | 96.67% | 0.51×10⁻³ | 500cycle/8 4%SOC |
| Embodim ent 9 | PE | PP | Lithium hydroxi de | 75% | 1:10 | 10 | 1:1 | 100% | 97.54% | 0.64×10⁻³ | 500cycle/9 3%SOC |
| Embodim ent 10 | PE | PP | Lithium silicide | 47% | 1:10 | 10 | 1:1 | 100% | 96.46% | 0.71×10⁻³ | 500cycle/8 7%SOC |
| Embodim ent 11 | PE | PP | Lithium Oxalate | 80% | 1:05 | 5 | 1:1 | 100% | 94.16% | 0.72×10⁻³ | 500cycle/9 7%SOC |
| Embodim ent 12 | PE | PP | Lithium Oxalate | 64% | 1:08 | 8 | 1:1 | 100% % | 98.27% | 0.54×10⁻³ | 500cycle/9 4%SOC |
| Embodim ent 13 | PE | PP | Lithium Oxalate | 43% | 1:14 | 14 | 1:1 | 100% | 93.17% | 0.47×10⁻³ | 500cycle/9 1%SOC |
| Embodim ent 14 | PE | PP | Lithium Oxalate | 10% | 1:20 | 20 | 1:1 | 100% | 96.51% | 0.23×10⁻³ | 500cycle/8 6%SOC |
| Embodim ent 15 | PE | PP | Lithium Oxalate | 3% | / | 10 | / | / | 99.70% | 0.58×10⁻³ | 500cycle/9 7%SOC |

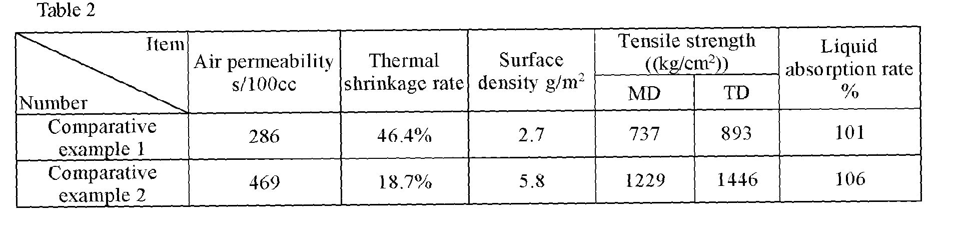

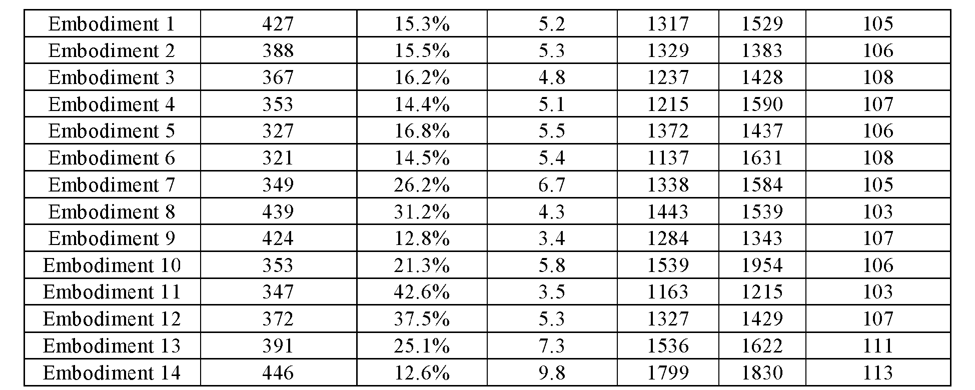

**Table 3**

| Number | Ratio of the total matter amount of the Li element in the lithium-rich particles in the coating to the total matter amount of the positive electrode active material in the positive electrode active material film layer | Capacity recovery rate | Cycle performance (capacity retention ratio) |
|---|---|---|---|
| Embodiment 16 | 0.6:1 | 100% | 500cycle/91%SOC |
| Embodiment 17 | 0.8:1 | 100% | 500cycle/94%SOC |
| Embodiment 18 | 1.2:1 | 100% | 500cycle/93%SOC |
| Embodiment 19 | 1.5 | 100% | 500cycle/93%SOC |
| Comparative example 3 | 1.6 | 100% | 329cycle/short circuit |
| Comparative example 4 | 1.8 | 100% | 21cycle/short circuit |

## Claims

1. A separator, comprising:
a first microporous base membrane,
a second microporous base membrane, and
a coating arranged between the first microporous base membrane and the second microporous base membrane, wherein the coating comprises lithium-rich particles, and a ratio of an average particle size Dv50 of the lithium-rich particles to a thickness of the coating is 1:(1-15).

2. The separator according to claim 1, wherein the ratio of the average particle size Dv50 of the lithium-rich particles to the thickness of the coating is 1:(1.5-10).

3. The separator according to claim 1 or 2, wherein the average particle size Dv50 of the lithium-rich particles is in a range from 0.2 µm to 3 µm, optionally, 0.25 µm to 1 µm; and/or
the average particle size Dv90 of the lithium-rich particles is in a range from 0.5 µm to 5 µm, optionally, 0.5 µm to 2.0 µm; and/or
the average particle size Dv99 of the lithium-rich particles is in a range from 1 µm to 20 µm; and/or
a mass percentage content of the lithium-rich particles in the coating is in a range from 10% to 80%, optionally, 25% to 75%.

4. The separator according to any one of claims 1 to 3, wherein the lithium-rich particles comprise a lithium salt or a lithium-containing composite oxide having a layered structure, a spinel structure or an olivine structure; and/or
the lithium-rich particles comprise one or more of Li₂C₂O₄, LiOH, Li₁₅Si₄, and Li₄Sn.

5. The separator according to any one of claims 1 to 4, the separator, wherein the lithium-rich particles have a core-shell structure, wherein a core comprises a lithium salt or a lithium-containing composite oxide having a layered structure; and a shell comprises one or more of carbon and silicon oxide.

6. The separator according to claim 4 or 5, wherein the lithium salt or the lithium-containing composite oxide having the layered structure comprises one or more of LiₓMO_{y}, and Liₓ [M_{b}A_{d}]O_{y}, wherein M includes one or more of Mn, Co, and Ni metal, A includes one or more elements of Al, Fe, V, Mg, Ca, Sr, and Ga, x is 0.8 to 2.2, y is 1.8 to 3.2, b>0, d>0, and b+d =1.

7. The separator according to any one of claims 1 to 7, wherein the separator satisfies at least one of the following conditions:
the first microporous base membrane and the second microporous base membrane respectively comprise one or more of a polyolefin film, a non-woven fabric film, a polyester film, a polyether film, a polyetherimide film, and a fluorinated polyetherimide film;
a thickness of the first microporous base membrane and a thickness of the second microporous base membrane are each in a range from 3 µm to 20 µm;
a porosity of the first microporous base membrane and a porosity of the second microporous base membrane are each in a range from 30% to 70%;
the coating has a thickness ranging from 0.5 µm to 20 µm; and
the coating comprises a binder and ceramic particles.

8. The separator according to claim 7, wherein
an average particle size Dv50 of the ceramic particles is in a range from 0.2 µm to 6 µm; and/or
a mass content of the ceramic particles in the coating is in a range from 20% to 60%.

9. The separator according to claim 7 or 8, wherein a mass content of the binder in the coating is in a range from 10% to 20%.

10. The separator according to any one of claims 1 to 9, wherein the separator satisfies at least one of the following conditions:
a porosity of the separator is in a range from 25% to 65%;
under a condition of testing for 1 h at 130°C, a thermal shrinkage rate of the separator in a machine direction (MD) is ≤5.0%, and a thermal shrinkage rate of the separator in a transverse direction (TD) is ≤5.0%;
an air permeability of the separator is in a range from 300 s/100cc to 500 s/100cc;
a tensile strength of the separator in the transverse direction (TD) is in a range from 1000 kg/cm² to 2000 kg/cm²; and
a tensile strength of the separator in the machine direction (MD) is in a range from 1200 kg/cm² to 1800 kg/cm².

11. A separator, comprising:
a first microporous base membrane and a second microporous base membrane, a first coating arranged between the first microporous base membrane and the second microporous base membrane, and
a third microporous base membrane, arranged on a side of the second microporous base membrane facing away from the first microporous base membrane; and
a second coating, arranged between the second microporous base membrane and the third microporous base membrane;
wherein the first coating and/or the second coating include(s) lithium-rich particles, where a ratio of an average particle size Dv50 of the lithium-rich particles to a thickness of the coating is 1:(1-15), optionally, 1:(1.5-10).

12. A method for preparing a separator, comprising:
providing a slurry comprising lithium-rich particles;
providing a coating of the slurry between a first microporous base membrane and a second microporous base membrane; and
drying the slurry, and making a ratio of an average particle size Dv50 of the lithium-rich particles to a thickness of the dried coating is 1:(1-15) to obtain the separator according to any one of claims 1 to 9.

13. A secondary battery, comprising the separator according to any one of claims 1 to 10 or a separator prepared by the preparation method according to claim 11 or 12.

14. The secondary battery according to claim 13, wherein a positive electrode plate comprises a recovered positive electrode plate, the recovered positive electrode plate comprises a charged and discharged positive electrode active material film layer, and the positive electrode active material film layer comprises a lithium-containing positive electrode active material.

15. The secondary battery according to claim 14, wherein the lithium-containing positive electrode active material comprises a lithium iron phosphate material, a mixed crystal phase of LFP and FPO is comprised in a state that a capacity of the secondary battery is discharged to 0%, and a molar ratio of an LFP crystal phase and an FPO crystal phase is 97:(3-97).

16. The secondary battery according to any one of claims 13 to 15, wherein after the secondary battery is formed, a ratio of a molar amount n1 of the lithium-containing positive electrode active material in the positive electrode active material film layer to a molar amount n2 of a lithium element in the lithium-rich particles in the coating is (0.2-50):1, and optionally, (20-40):1.

17. A method for preparing a secondary battery, comprising:
providing the separator according to any one of claims 1 to 11 or a separator prepared by the preparation method according to claim 11 or 12, wherein the separator comprises a first microporous base membrane, a second microporous base membrane and a coating arranged between the first microporous base membrane and the second microporous base membrane, wherein the coating comprises lithium-rich particles, and a ratio of an average particle size Dv50 of the lithium-rich particles to a thickness of the coating is 1:(1-15); and
preparing a secondary battery including the separator and a recovered positive electrode plate.

18. The preparation method according to claim 17, wherein a positive electrode plate comprises a lithium-containing positive electrode active material, a ratio of a total molar amount n3 of the lithium-containing positive electrode active material in a positive electrode active material film layer to a total molar amount n4 of a lithium element in the lithium-rich particles in the coating is (0.2-1.5):1, and optionally, (0.5-1.2):1.

19. An electrical apparatus, comprising the secondary battery according to any one of claims 13 to 16 or a secondary battery prepared by the preparation method according to claim 17 or 18.
